# EUROPÄISCHE PATENTSCHRIFT

(11) **EP 4 139 761 B1**
(45) Veröffentlichungstag und Bekanntmachung des Hinweises auf die Patenterteilung: **25.12.2024**
(21) Anmeldenummer: 21720442.9
(22) Anmeldetag: 19.04.2021
(51) Int. Cl.: G05B 23/02, G05B 17/02, G05B 19/07, G05B 19/042

(54) **VERFAHREN ZUM BETREIBEN EINES STEUERGERÄTS FÜR EIN KRAFTFAHRZEUG SOWIE ENTSPRECHENDES STEUERGERÄT**
METHOD FOR OPERATING A CONTROLLER FOR A MOTOR VEHICLE, AND CORRESPONDING CONTROLLER
PROCÉDÉ DESTINÉ À COMMANDER UN CONTRÔLEUR POUR UN VÉHICULE À MOTEUR, ET CONTRÔLEUR CORRESPONDANT

(30) Priorität: 24.04.2020 DE 102020111206
(43) Veröffentlichungstag der Anmeldung: 01.03.2023
(73) Patentinhaber: Audi AG, 85045 Ingolstadt (DE)
(72) Erfinder: SMIRNOV, Alexey, 70435 Stuttgart (DE)
(74) Vertreter: Dietz, Christopher Friedrich
(86) Internationale Anmeldenummer: PCT/EP2021/060131
(87) Internationale Veröffentlichungsnummer: WO 2021/213997

(56) Entgegenhaltungen:
- EP-A1- 3 432 093
- WO-A1-95/33132
- DE-A1- 4 304 441

## Beschreibung

Die Erfindung betrifft ein Verfahren zum Betreiben einer Antriebseinrichtung für ein Kraftfahrzeug, welche ein Steuergerät und ein Antriebsaggregat aufweist und mit Hilfe des Steuergeräts angesteuert wird, wobei n-dimensionalen Referenzeingangsvektoren jeweils ein Referenzausgangsvektor zugeordnet ist, die in dem Steuergerät hinterlegt sind und aus welchen zumindest zu einem Betriebsparameter für das Antriebsaggregat des Kraftfahrzeugs aufweisenden n-dimensionalen Eingangsvektor ein Ausgangsvektor ermittelbar ist, sowie ein entsprechendes Steuergerät.

Aus dem Stand der Technik ist beispielsweise die Druckschrift DE 10 2010 028 266 A1 bekannt. Diese beschreibt ein Steuergerät in einem Fahrzeug vorgeschlagen, welches Mittel aufweist, während eines Betriebs des Fahrzeugs auf Basis von mindestens einer während des Betriebs ermittelten Eingangsgröße mindestens eine Ausgangsgröße für eine Steuerung von Funktionen des Fahrzeugs zu berechnen. Dabei weist das Steuergerät Mittel auf, die Berechnung der Ausgangsgrößen unter Verwendung einer Bayes`schen Regression von vor dem Betrieb für die Ausgangsgröße und die Eingangsgröße ermittelten Trainingswerten durchzuführen.

Weiterhin offenbart die Druckschrift WO 95/33132 A1 ein Verfahren zur Steuerung/Regelung von Prozessen in einem Kraftfahrzeug, das z.B. für die Steuerung/Regelung von Verbrennungsvorgängen, Getriebeschaltvorgängen oder Bremsvorgängen dient. Bei dem Verfahren wird ein Kennfeld verwendet. Das Kennfeld wird durch Betriebsgrößen des jeweiligen Prozesses aufgespannt und durch eine Anzahl von Stützstellen repräsentiert. In dem entsprechenden Steuergerät ist für jede Stützstelle eine Information über den Wert des Kennfeldes an der Position der Stützstelle vorgesehen. Bei der Steuerung/Regelung des Prozesses wird für einen ermittelten Arbeitspunkt des Prozesses mindestens ein für diesen Arbeitspunkt maßgebender Kennfeldwert aus dem Kennfeld ermittelt und unter dessen Berücksichtigung mindestens eine Steuergröße für die Abgabe eines Steuersignals gebildet. Das Kennfeld wird dabei automatisch an ein verändertes Prozessverhalten angepasst. Zur Anpassung wird ein Korrekturwert für eine bestimmte Betriebsphase des Kennfeldes ermittelt. Bei dem Verfahren wird zusätzlich für jede Stützstelle eine Information über die Position der Stützstelle innerhalb des Kennfeldes vorgesehen, so dass die Stützstellen unabhängig von einem festen Raster in das Kennfeld eintragbar sind. Zur Anpassung des Kennfeldes wird eine Anzahl von um den ermittelten Korrekturwert umliegenden Stützstellen des Kennfeldes ausgewählt. Es werden dann diese Stützstellen angepasst, wobei die Stützstellenkorrektur abstandsgewichtet in Bezug auf die Position des ermittelten Korrekturwerts innerhalb des Kennfeldes vorgenommen wird.

Zudem ist aus der Druckschrift DE 10 2013 206308 A1 ein ein Verfahren zum Adaptieren von Modellparametern eines in einem Steuergerät eines Kraftfahrzeugs implementierten Funktionsmodells, mit folgenden Schritten: - Bereitstellen mindestens eines Modellparameters in der zentralen Einrichtung; und - Übermitteln des mindestens einen adaptierten Modellparameters an das Kraftfahrzeug, - Anwenden des mindestens einen adaptierten Modellparameters in dem implementierten Funktionsmodell.

Es ist Aufgabe der Erfindung, ein Verfahren zum Betreiben einer Antriebseinrichtung für ein Kraftfahrzeug vorzuschlagen, welches gegenüber bekannten Verfahren Vorteile aufweist, insbesondere eine Verbesserung oder zumindest eine Veränderung des Modells während des Betriebs der Antriebseinrichtung zulässt und/oder eine Ermittlung eines Ausgangsvektors für einen Eingangsvektor aus einem Modell mit geringem Rechenaufwand ermöglicht.

Dies wird erfindungsgemäß mit einem Verfahren zum Betreiben einer Antriebseinrichtung für ein Kraftfahrzeug mit den Merkmalen des Anspruchs 1 erreicht. Dabei ist vorgesehen, dass bei Vorliegen eines neuen Referenzeingangsvektors mit dazugehörigem neuen Referenzausgangsvektor mittels des Steuergeräts folgende Schritte in der angegebenen Reihenfolge durchgeführt werden:
a. Ermitteln eines Einzelfehlers der Referenzeingangsvektoren, der die Genauigkeit beschreibt, mit welcher der Referenzausgangsvektor eines der Referenzeingangsvektoren aus den anderen Referenzeingangsvektoren und den ihnen zugeordneten Referenzausgangsvektoren ermittelt werden kann, ohne auf den einen Referenzeingangsvektor und seinen Referenzausgangsvektor zurückzugreifen;
b. Zwischenspeichern des Referenzeingangsvektors mit dem kleinsten Einzelfehler und Entfernen dieses Referenzeingangsvektors aus den Referenzeingangsvektoren;
c. Berechnen des Ausgangsvektors mit dem neuen Referenzeingangsvektor als Eingangsvektor;
d. Ermitteln des Einzelfehlers aus einer Differenz zwischen dem Ausgangsvektor und dem dem neuen Referenzeingangsvektor zugeordneten Referenzausgangsvektor;
e. Hinzufügen des entfernten Referenzeingangsvektors zu den Referenzeingangsvektoren;
f. Ersetzen des Referenzeingangsvektors mit dem kleinsten Einzelfehler durch den neuen Referenzeingangsvektor, falls der Einzelfehler des neuen Referenzeingangsvektors größer ist als der kleinste Einzelfehler; wobei
g. dem Antriebsaggregat und dem Steuergerät derselbe Eingangsvektor zugeführt wird, welcher den zumindest einen Betriebsparameter für das Antriebsaggregat aufweist, wobei das Antriebsaggregat anhand des zumindest einen Betriebsparameters betrieben wird und das Steuergerät aus dem Eingangsvektor den Ausgangsvektor ermittelt, wobei eine gemessener Messwert, der eine Ausgangsgrößedes Antriebsaggregats darstellt, mit dem Ausgangsvektor verglichen und bei einer Abweichung auf einen Fehler des Antriebsaggregats erkannt und/oder der Eingangsvektor derart angepasst wird, dass der Messwert dem Ausgangsvektor entspricht.

Das Steuergerät dient dem Steuern der Antriebseinrichtung des Kraftfahrzeugs. Die Antriebseinrichtung dient dem Antreiben des Kraftfahrzeugs, insoweit also dem Bereitstellen eines auf das Antreiben des Kraftfahrzeugs gerichteten Antriebsdrehmoments. Insbesondere wird das Steuergerät zum Steuern des Antriebsaggregats der Antriebseinrichtung verwendet, welches schlussendlich das Antriebsdrehmoment erzeugt. Das Antriebsaggregat liegt beispielsweise in Form einer Brennkraftmaschine, insbesondere einer Ottobrennkraftmaschine oder einer Dieselbrennkraftmaschine, vor.

Dem Antriebsaggregat und dem Steuergerät werden derselbe Eingangsvektor zugeführt, welcher Betriebsparameter für das Antriebsaggregat aufweist. Das Antriebsaggregat wird anhand der Betriebsparameter betrieben, wohingegen das Steuergerät aus dem Eingangsvektor, also den Betriebsparametern, den Ausgangsvektor ermittelt. Der gemessene Messwert, der die Ausgangsgröße des Antriebsaggregats darstellt, wird mit dem Ausgangsvektor verglichen und bei einer Abweichung, insbesondere bei einer über einer Toleranzgrenze liegenden Abweichung, auf einen Fehler der Brennkraftmaschine erkannt und/oder der Eingangsvektor derart angepasst, dass der Messwert dem Ausgangsvektor entspricht.

Das Steuergerät wird - optional - zumindest zeitweise verwendet, um mithilfe eines Modells den zu dem Eingangsvektor passenden Ausgangsvektor zu ermitteln. Im Falle der Brennkraftmaschine dient beispielsweise wenigstens einer der folgenden Werte als Eingangsvektor: eine Drehzahl und ein Einspritzparameter, insbesondere eine Kraftstoffmenge und/oder ein Einspritzzeitpunkt. Besonders bevorzugt setzt sich der Eingangsvektor aus mehreren der genannten Werte zusammen. Auch eine Umgebungsbedingung, beispielsweise eine Umgebungstemperatur und/oder ein Umgebungsluftdruck, kann als Eingangsvektor oder als Bestandteil des Eingangsvektors verwendet werden.

Der Eingangsvektor liegt als n-dimensionaler Eingangsvektor vor. Das bedeutet, dass er beliebig dimensioniert sein kann. Beispielsweise ist der Eingangsvektor eindimensional, also skalar. Vorzugsweise ist der Eingangsvektor jedoch mehrdimensional, beispielsweise zweidimensional oder dreidimensional. Mithilfe des Modells wird dem Eingangsvektor der Ausgangsvektor zugeordnet. Der Ausgangsvektor umfasst beispielsweise wenigstens einen der folgenden Werte: Drehmoment, Kraftstoffverbrauch, Schadstoffemissionen. Beispielsweise ist der Ausgangsvektor lediglich auf einen einzelnen Wert gerichtet, ist also skalar. Selbstverständlich kann der Ausgangsvektor jedoch auch mehrere Werte umfassen. Es kann vorgesehen sein, dass der Eingangsvektor gefiltert ist, insbesondere über der Zeit. Hierdurch werden Sprünge des Ausgangsvektors vermieden und/oder ein dynamischer Verlauf des Ausgangsvektors für den Eingangsvektor modelliert.

Zum Ermitteln des Ausgangsvektors aus dem Eingangsvektor sind in dem Steuergerät n-dimensionale Referenzeingangsvektoren hinterlegt. Unter den Referenzeingangsvektoren ist ganz allgemein eine Menge von Referenzeingangsvektoren zu verstehen, die eine beliebige Anzahl an Referenzeingangsvektoren aufweisen kann. Die Referenzeingangsvektoren können also überhaupt keine Referenzeingangsvektoren, genau einen Referenzeingangsvektor oder mehrere Referenzeingangsvektoren umfassen. Der Lesbarkeit wegen wird jedoch stets von den Referenzeingangsvektoren im Plural gesprochen, wobei stets eine Referenzeingangsvektormenge mit einer beliebigen Anzahl von Referenzeingangsvektoren gemeint ist. Dies gilt im Übrigen bevorzugt auch für die weiteren Vektoren, auch ohne dass dies jeweils ausdrücklich erwähnt ist.

Den Referenzeingangsvektoren ist jeweils ein Referenzausgangsvektor zugeordnet. Die Referenzeingangsvektoren sind hierbei jeweils analog zu dem Eingangsvektor ausgebildet, der Referenzausgangsvektor analog zu dem Ausgangsvektor. Insbesondere weisen die Referenzeingangsvektoren also jeweils dieselbe Dimension auf wie der Eingangsvektor und umfassen dieselben Größen beziehungsweise Werte. Auch der Referenzausgangsvektor ist analog zu dem Ausgangsvektor aufgebaut, weist also dieselbe Dimension auf und betrifft dieselbe Größe beziehungsweise denselben Wert. Der Referenzausgangsvektor kann insoweit lediglich einen Skalar aufweisen. Grundsätzlich kann in dem Steuergerät eine beliebige Anzahl an Referenzeingangsvektoren und dazugehörigen Referenzausgangsvektoren hinterlegt sein. Hierzu verfügt das Steuergerät beispielsweise über einen entsprechenden Speicher.

Es sei darauf hingewiesen, dass falls im Rahmen dieser Beschreibung von wenigstens einem Vektor die Rede ist, lediglich genau ein Vektor vorliegen kann. Bevorzugt liegen jedoch mehrere Vektoren vor und die Ausführungen zu dem Vektor oder dem wenigstens einen Vektor sind analog auf jeden der mehreren Vektoren übertragbar. Umgekehrt kann, falls von mehreren Vektoren die Rede ist, selbstverständlich lediglich ein einziger Vektor oder wenigstens einer der genannten Vektoren vorliegen. Dies gilt insbesondere, jedoch nicht ausschließlich, für den wenigstens einen Referenzeingangsvektor, den wenigstens einen Nachbarvektor, den wenigstens einen Berechnungsvektor und/oder den wenigstens einen Klassifikationsvektor.

Das beschriebene Verfahren hat vor allem den Vorteil, dass die Datenbasis, also die Referenzeingangsvektoren und die Referenzausgangsvektoren, aus welchen der Ausgangsvektor ermittelt wird, anpassbar ist. Dieses Anpassen kann dabei nicht lediglich vor einer Inbetriebnahme des Steuergeräts erfolgen, sondern auch während eines Betriebs des Steuergeräts, insbesondere während eines Betriebs der Antriebseinrichtung beziehungsweise während eines Betriebs des Kraftfahrzeugs.

Beispielsweise wird der zu dem neuen Referenzeingangsvektor gehörende neue Referenzausgangsvektor nach dem Einstellen des Referenzeingangsvektors an dem Antriebsaggregat mittels eines Sensors gemessen. Um das Modell mithilfe dieser Messung zu verbessern, wird dann geprüft, ob der neue Referenzeingangsvektor mit dem neuen Referenzausgangsvektor einer Genauigkeit des Modells zuträglich ist. Der neue Referenzeingangsvektor und der dazugehörige neue Referenzausgangsvektor werden also beispielsweise ermittelt, indem der neue Referenzeingangsvektor eingestellt wird, insbesondere an der Antriebseinrichtung beziehungsweise dem Antriebsaggregat, und der sich hieraus ergebende Referenzausgangsvektor gemessen oder auf andere Art und Weise ermittelt wird.

Zunächst werden nun die Einzelfehler der Referenzeingangsvektoren berechnet und den einzelnen Referenzeingangsvektoren zugeordnet. Anschließend wird für wenigstens einen der Referenzeingangsvektoren geprüft, ob sich die Genauigkeit des Modells durch ein Ersetzen des Referenzeingangsvektors mit dem neuen Referenzeingangsvektor verbessern lässt. Besonders bevorzugt wird die Vorgehensweise zumindest für den Referenzeingangsvektor mit dem kleinsten Einzelfehler durchgeführt. Hierzu wird zunächst der wenigstens eine Referenzeingangsvektor, insbesondere der Referenzeingangsvektor mit dem kleinsten Einzelfehler, aus den Referenzeingangsvektoren entfernt.

Anschließend wird der neue Referenzeingangsvektor als Eingangsvektor verwendet und für diesen der Ausgangsvektor bestimmt, nämlich unter Verwendung der verbleibenden Referenzeingangsvektoren. Aus dem Ausgangsvektor wird dann der Einzelfehler des neuen Referenzeingangsvektors bestimmt. Hierzu wird die Differenz zwischen dem Ausgangsvektor und demjenigen Referenzausgangsvektor ermittelt, der dem neuen Referenzeingangsvektor zugeordnet ist. Diese Differenz wird als Einzelfehler zwischengespeichert.

Nachfolgend wird der entfernte und zwischengespeicherte Referenzeingangsvektor wieder zu den Referenzeingangsvektoren hinzugefügt. Schlussendlich liegen nach den beschriebenen Schritten dieselben Referenzeingangsvektoren vor wie zuvor. Dann wird der Einzelfehler des neues Referenzeingangsvektors mit dem kleinsten Einzelfehler, also dem Einzelfehler des zwischengespeicherten Referenzeingangsvektors verglichen. Ist der Einzelfehler des neuen Referenzeingangsvektors größer als der kleinste Einzelfehler, so wird der Referenzeingangsvektor, dem der kleinste Einzelfehler zugeordnet ist, durch den neuen Referenzeingangsvektor ersetzt. Anschließend werden die Referenzeingangsvektoren vorzugsweise abgespeichert, also als gespeicherte Referenzeingangsvektoren hinterlegt.

Dies stellt eine besonders einfache und hinsichtlich des Rechenaufwands vorteilhafte Vorgehensweise zum Optimieren der Referenzeingangsvektoren dar. Schlussendlich wird anhand der Einzelfehler beurteilt, ob durch den Austausch desjenigen Referenzeingangsvektors, welcher am wenigstens benötigt wird, gegen den neuen Referenzeingangsvektor eine Verbesserung der Genauigkeit erzielt werden kann. Ergänzend sei auch die weiteren Ausführungen im Rahmen dieser Beschreibung hingewiesen, insbesondere auf die nachfolgenden Ausführungen.

Eine Weiterbildung der Erfindung sieht vor, dass zum Ermitteln von Einzelfehlern der Referenzeingangsvektoren für jeden der Referenzeingangsvektoren folgende Schritte, insbesondere in der angegebenen Reihenfolge, durchgeführt werden:
a. Zwischenspeichern des jeweiligen Referenzeingangsvektors als Prüfvektor und Entfernen des Referenzeingangsvektors aus den Referenzeingangsvektoren,
b. Berechnen des Ausgangsvektors mit dem Prüfvektor als Eingangsvektor,
c. Ermitteln des jeweiligen Einzelfehlers aus einer Differenz zwischen dem Ausgangsvektor und dem dem Prüfvektor zugeordneten Referenzausgangsvektor,
d. Zuordnen des jeweiligen Einzelfehlers zu dem Prüfvektor, und
e. Hinzufügen des Prüfvektors zu den Referenzeingangsvektoren.

Von Zeit zu Zeit und insbesondere im Rahmen der vorstehend beschriebenen Optimierung der Referenzeingangsvektoren kann es sinnvoll sein, für jeden der Referenzeingangsvektoren einen Einzelfehler zu ermitteln. Dieser Einzelfehler beschreibt schlussendlich die Genauigkeit, mit welcher der Referenzausgangsvektor eines der Referenzeingangsvektoren aus den anderen Referenzeingangsvektoren und denen ihnen zugeordneten Referenzausgangsvektoren ermittelt werden kann, ohne auf den einen Referenzeingangsvektor und seinen Referenzausgangsvektor zurückzugreifen.

Hierzu wird der Referenzeingangsvektor als Prüfvektor zwischengespeichert, beispielsweise in einem entsprechenden Zwischenspeicher. Anschließend wird der Referenzeingangsvektor beziehungsweise Prüfvektor aus den Referenzeingangsvektoren entfernt. Nachfolgend wird der Prüfvektor als Eingangsvektor verwendet und der Ausgangsvektor aus den verbleibenden Referenzeingangsvektoren für den Eingangsvektor berechnet. Dann wird der Einzelfehler ermittelt, indem die Differenz zwischen dem Ausgangsvektor und demjenigen Referenzausgangsvektor berechnet wird, der dem Prüfvektor zugeordnet ist.

Danach wird der Einzelfehler dem Prüfvektor zugeordnet, also zusammen mit diesem abgespeichert. Abschließend wird der Prüfvektor wieder den Differenzvektoren hinzugefügt, sodass nachfolgend dieselben Referenzeingangsvektoren vorliegen wie vor dem Ermitteln des Einzelfehlers für den Referenzeingangsvektor. Die beschriebene Vorgehensweise wird vorzugsweise für jeden der Referenzeingangsvektoren durchgeführt. Nachfolgend ist eine Beurteilung möglich, ob alle Referenzeingangsvektoren notwendig sind, um eine hinreichend hohe Genauigkeit bei der Ermittlung des Ausgangsvektors zu erzielen beziehungsweise ob mithilfe des neuen Referenzeingangsvektors die Genauigkeit des Modells verbessert werden kann.

Eine Weiterbildung der Erfindung sieht vor, dass zum Ermitteln des Einzelfehlers eine Vorzeichenbereinigung der Differenz durchgeführt wird. Bei dem Ermitteln des Einzelfehlers wird die Differenz zwischen dem Ausgangsvektor und dem dem Prüfvektor zugeordneten Referenzausgangsvektor gebildet. Der Einzelfehler entspricht nun der vorzeichenbereinigten Differenz, um eine hohe Aussagekraft zu erzielen. Beispielsweise ist es vorgesehen, die Differenz zur Vorzeichenbereinigung zu quadrieren. Der Einzelfehler entspricht in diesem Fall der Wurzel aus der quadrierten Differenz. Diese Vorgehensweise stellt eine äußerst genaue und zuverlässige Vorgehensweise bei der Ermittlung des Einzelfehlers dar.

Eine Weiterbildung der Erfindung sieht vor, dass zum Optimieren der Referenzeingangsvektoren die folgenden Schritte, insbesondere alle folgenden Schritte, bevorzugt in der angegebenen Reihenfolge, durchgeführt werden:
a. Ermitteln der Einzelfehler der Referenzeingangsvektoren;
b. Berechnen eines Ursprungsgesamtfehlers aus den Einzelfehlern, insbesondere dividiert durch die Anzahl der Referenzeingangsvektoren, bevorzugt aus quadrierten Einzelfehlern,
c. Durchführen der folgenden Schritte, insbesondere in der angegebenen Reihenfolge, für jeden der Referenzeingangsvektoren:
   i. Entfernen des jeweiligen Referenzeingangsvektors aus den Referenzeingangsvektoren,
   ii. Ermitteln des Einzelfehlers jedes der verbleibenden Referenzeingangsvektoren,
   iii. Berechnen eines Reduktionsgesamtfehlers des entfernten Referenzeingangsvektoren aus den Einzelfehlern der verbleibenden Referenzeingangsvektoren, insbesondere dividiert durch die Anzahl der Referenzeingangsvektoren, bevorzugt aus quadrierten Einzelfehlern,
   iv. Zuordnen des Reduktionsgesamtfehlers zu dem entfernten Referenzeingangsvektor;
   v. Hinzufügen des entfernten Referenzeingangsvektors zu den Referenzeingangsvektoren;
d. Entfernen des Referenzeingangsvektors mit dem kleinsten Reduktionsgesamtfehler und/oder mit einem den Ursprungsgesamtfehler unterschreitenden Reduktionsgesamtfehler aus den Referenzeingangsvektoren.

Zunächst werden also auf die vorstehend beschriebene Art und Weise die Einzelfehler der Referenzeingangsvektoren berechnet und den einzelnen Referenzeingangsvektoren zugeordnet. Anschließend kann beispielsweise zum Optimieren der Referenzeingangsvektoren der Referenzeingangsvektor mit dem kleinsten Einzelfehler aus den Referenzeingangsvektoren entfernt und anschließen das Optimieren beendet werden. Bevorzugt wird jedoch aus den Einzelfehlern der Ursprungsgesamtfehler berechnet. Hierzu werden die Einzelfehler beispielsweise aufsummiert. Besonders bevorzugt ist es vorgesehen, dass der Ursprungsgesamtfehler gleich der Summe aus den Einzelfehlern aller Referenzeingangsvektoren, dividiert durch die Anzahl der Referenzeingangsvektoren ist. Es kann auch vorgesehen sein, dass die Einzelfehler vor dem Aufsummieren quadriert werden. In diesem Fall entspricht der Ursprungsgesamtfehler bevorzugt der Wurzel aus den aufsummierten quadrierten Einzelfehlern dividiert durch die Anzahl der Referenzeingangsvektoren.

Anschließend wird für jeden der Referenzeingangsvektoren der Reduktionsgesamtfehler berechnet. Hierzu dient eine Vorgehensweise, welche ähnlich der Vorgehensweise zum Bestimmen des Einzelfehlers ist. Es wird zunächst der jeweilige Referenzeingangsvektor aus den Referenzeingangsvektoren entfernt und der Einzelfehler jedes der verbleibenden Referenzeingangsvektoren mithilfe der verbleibenden Referenzeingangsvektoren berechnet. Jedem der verbleibenden Referenzeingangsvektoren ist insoweit wiederum der Einzelfehler zugeordnet, welcher ohne den entfernten Referenzeingangsvektor vorliegt.

Aus den Einzelfehlern der verbleibenden Referenzeingangsvektoren wird der Reduktionsgesamtfehler ermitteln. Dies erfolgt analog zu der Berechnung des Ursprungsgesamtfehlers, sodass insoweit auf die entsprechenden Ausführungen verwiesen wird. Der Reduktionsfehler wird dem entfernten Referenzeingangsvektor zugeordnet und dieser den Referenzeingangsvektoren wieder hinzugefügt. Nachfolgend liegt also für jeden der Referenzeingangsvektoren der Reduktionsgesamtfehler beziehungsweise ein Wert für den Reduktionsgesamtfehler vor.

Der Reduktionsgesamtfehler beschreibt die Genauigkeit des Verfahrens zur Ermittlung des Ausgangsvektors für den Eingangsvektor bei Verwendung lediglich eines Teils der Referenzeingangsvektoren, nämlich unter Ausschluss des jeweils entfernten Referenzeingangsvektors. Er ermöglicht insoweit eine Aussage, ob der entfernte Referenzeingangsvektor der Genauigkeit des Verfahrens zuträglich ist oder ob der Referenzeingangsvektor unter Umständen entfernt werden kann.

Es ist vorgesehen, die Reduktionsgesamtfehler der Referenzeingangsvektoren zu prüfen. Es kann vorgesehen sein, den Referenzeingangsvektor mit dem kleinsten Reduktionsgesamtfehler zu ermitteln und aus den Referenzeingangsvektoren zu entfernen. Weil dem Referenzeingangsvektor der kleinste Reduktionsgesamtfehler zugeordnet ist, resultieren aus dem Entfernen des Referenzeingangsvektors geringere Genauigkeitseinbußen als aus einem Entfernen der anderen Referenzeingangsvektoren.

Zusätzlich oder alternativ wird überprüft, ob der Reduktionsgesamtfehler kleiner ist als der Ursprungsgesamtfehler. Beispielsweise werden alle Referenzeingangsvektoren aus den Referenzeingangsvektoren entfernt, für welche diese Bedingung erfüllt ist. Besonders bevorzugt ist es jedoch vorgesehen, lediglich den Referenzeingangsvektor mit dem kleinsten Reduktionsgesamtfehler aus den Referenzeingangsvektoren zu entfernen, sofern zusätzlich die Bedingung erfüllt ist, dass der Reduktionsgesamtfehler dieses Referenzeingangsvektors den Ursprungsgesamtfehler unterschreitet, also kleiner ist als dieser.

Die beschriebene Vorgehensweise ermöglicht eine besonders effektive Reduzierung der Anzahl der Referenzeingangsvektoren und entsprechend eine Reduzierung des Speicherbedarfs zum Speichern der Referenzeingangsvektoren, insbesondere ohne eine unzulässige Verringerung der Genauigkeit des Modells, welches auf den Referenzeingangsvektoren beruht.

Eine Weiterbildung der Erfindung sieht vor, dass bei Vorliegen eines Referenzeingangsvektors in den Referenzeingangsvektoren, der dem neuen Referenzeingangsvektor entspricht, der neue Referenzausgangsvektor aus dem dem entsprechenden Referenzeingangsvektor zugeordneten Referenzausgangsvektor und dem neuen Referenzausgangsvektor ermittelt wird. Beispielsweise ist es vorgesehen, dass der neue Referenzausgangsvektor gleich dem Mittelwert aus dem dem entsprechenden Referenzeingangsvektor zugeordneten Referenzausgangsvektor und dem neuen Referenzausgangsvektor gesetzt wird. Sollte also der neue Referenzeingangsvektor gleich einem der bereits vorliegenden Referenzeingangsvektoren sein, so wird der diesem Referenzeingangsvektor zugeordnete Referenzausgangsvektor unter Verwendung des neuen Referenzausgangsvektors angepasst. Anschließend werden die Referenzeingangsvektoren vorzugsweise abgespeichert, also als gespeicherte Referenzeingangsvektoren hinterlegt. Hieraus ergibt sich eine iterative Verbesserung des Modells.

Eine Weiterbildung der Erfindung sieht vor, dass der neue Referenzausgangsvektor durch Mittelwertbildung aus dem Referenzausgangsvektor und dem neuen Referenzausgangsvektor ermittelt wird. Falls also der neue Referenzeingangsvektor einem der bereits vorliegenden Referenzeingangsvektoren entspricht, wird der Referenzausgangsvektor dieses Referenzeingangsvektors unter Verwendung des neuen Referenzausgangsvektors angepasst. Hierzu wird der Mittelwert aus beiden Referenzausgangsvektoren gebildet und dem bereits vorliegenden der Referenzeingangsvektoren zugeordnet. Hierdurch werden eventuell bestehende Fehler in dem Modell über der Zeit behoben beziehungsweise korrigiert.

Eine Weiterbildung der Erfindung sieht vor, dass das Ersetzen des Referenzeingangsvektors mit dem neuen Referenzeingangsvektor nur dann durchgeführt wird, wenn eine Anzahl der Referenzeingangsvektoren, insbesondere eine Anzahl der gespeicherten Referenzeingangsvektoren, gleich einer festgelegten Maximalanzahl ist. Üblicherweise ist der in dem Steuergerät zur Verfügung stehende Speicherplatz begrenzt. Es kann daher vorgesehen sein, die Anzahl der Referenzeingangsvektoren auf die Maximalanzahl zu begrenzen, um Speicherplatz einzusparen.

Solange hinreichend Speicherplatz zur Verfügung steht, also die Anzahl der Referenzeingangsvektoren kleiner als die Maximalanzahl ist, kann der neue Referenzeingangsvektor zu den Referenzeingangsvektoren hinzugefügt werden, ohne einen der bereits vorliegenden Referenzeingangsvektoren zu entfernen oder durch den neuen Referenzeingangsvektor zu ersetzen. Ist jedoch die Maximalanzahl durch die Anzahl der Referenzeingangsvektoren erreicht, kann der neue Referenzeingangsvektor nicht mehr hinzugefügt werden, ohne einen der bereits vorliegenden Referenzeingangsvektoren zu entfernen. Entsprechend erfolgt beispielsweise das Ersetzen auf die vorstehend beschriebene Art und Weise. Hierdurch wird eine hohe Speichereffizienz des Steuergeräts beziehungsweise des Verfahrens erzielt.

Eine Weiterbildung der Erfindung sieht vor, dass bei Vorliegen des neuen Referenzeingangsvektors mit dazugehörigem neuen Referenzausgangsvektor folgende Schritte, insbesondere in der angegebenen Reihenfolge, durchgeführt werden:
a. Ermitteln der Einzelfehler der Referenzeingangsvektoren;
b. Berechnen eines Ursprungsgesamtfehlers aus den Einzelfehlern, insbesondere dividiert durch die Anzahl der Referenzeingangsvektoren, bevorzugt aus quadrierten Einzelfehlern;
c. Durchführen der folgenden Schritte, insbesondere in der angegebenen Reihenfolge, für einen oder mehrere der Referenzeingangsvektoren, insbesondere für den Referenzeingangsvektor mit dem kleinsten Einzelfehler:
   i. Ersetzen des jeweiligen Referenzeingangsvektors in den Referenzeingangsvektoren durch den neuen Referenzeingangsvektor,
   ii. Ermitteln des Einzelfehlers jedes der Referenzeingangsvektoren,
   iii. Berechnen eines Ersatzgesamtfehlers der Referenzeingangsvektoren aus den Einzelfehlern der Referenzeingangsvektoren, insbesondere dividiert durch die Anzahl der Referenzeingangsvektoren, bevorzugt aus quadrierten Einzelfehlern,
   iv. Zuordnen des Ersatzgesamtfehlers zu dem ersetzten Referenzeingangsvektor,
   v. Entfernen des neuen Referenzeingangsvektors aus den Referenzeingangsvektoren und Einfügen des ersetzten Referenzeingangsvektors in die Referenzeingangsvektoren;
d. Ersetzen des Referenzeingangsvektors mit dem kleinsten Ersatzgesamtfehler und/oder mit einem den Ursprungsgesamtfehler unterschreitenden Ersatzgesamtfehler durch den neuen Referenzeingangsvektor.

Der neue Referenzeingangsvektor und der dazugehörige neue Referenzausgangsvektor werden beispielsweise ermittelt, indem der neue Referenzeingangsvektor eingestellt wird, insbesondere an der Antriebseinrichtung beziehungsweise dem Antriebsaggregat, und der sich hieraus ergebende Referenzausgangsvektor gemessen oder auf andere Art und Weise ermittelt wird. Zunächst werden dann auf die vorstehend bereits beschriebene Art und Weise die Einzelfehler sowie der Ursprungsgesamtfehler berechnet. Auf die entsprechenden Ausführungen wird verwiesen.

Anschließend wird für wenigstens einen der Referenzeingangsvektoren geprüft, ob sich die Genauigkeit des Modells durch ein Ersetzen des Referenzeingangsvektors durch den neuen Referenzeingangsvektor verbessern lässt. Besonders bevorzugt wird die Vorgehensweise zumindest für den Referenzeingangsvektor mit dem kleinsten Einzelfehler durchgeführt. Es kann jedoch auch vorgesehen sein, die Vorgehensweise für mehrere Referenzeingangsvektoren, insbesondere die Referenzeingangsvektoren mit den kleinsten Einzelfehlern, oder alle Referenzeingangsvektoren vorzunehmen.

Grundsätzlich ist es dabei vorgesehen, den einen Referenzeingangsvektor durch den neuen Referenzeingangsvektor zu ersetzen, also den einen Referenzeingangsvektor aus den Referenzeingangsvektoren zu entfernen und den neuen Referenzeingangsvektor in die Referenzeingangsvektoren einzufügen. Anschließend wird für alle Referenzeingangsvektoren der Einzelfehler ermittelt, nämlich auf die bereits beschriebene Art und Weise. Aus den Einzelfehlern der Referenzeingangsvektoren wird der Ersatzgesamtfehler bestimmt. Dies erfolgt analog zu dem Bestimmen des Ursprungsgesamtfehlers, sodass auf die entsprechenden Ausführungen verwiesen wird. Der Ersatzgesamtfehler wird dem ersetzten Referenzeingangsvektor zugeordnet. Nachfolgend wird der neue Referenzeingangsvektor aus den Referenzeingangsvektoren entfernt und der ersetzte Referenzeingangsvektor wieder in diese eingefügt. Schlussendlich liegen nach den beschriebenen Schritten dieselben Referenzeingangsvektoren vor wie zuvor.

Anschließend wird geprüft, ob das Ersetzen des Referenzeingangsvektors beziehungsweise eines der Referenzeingangsvektoren durch den neuen Referenzeingangsvektor einen Genauigkeitsvorteil bietet. Beispielsweise wird derjenige Referenzeingangsvektor, welcher den kleinsten Ersatzgesamtfehler aufweist, durch den neuen Referenzeingangsvektor in den Referenzeingangsvektoren ersetzt. Alternativ ist es vorgesehen, denjenigen Referenzeingangsvektor durch den neuen Referenzeingangsvektor zu ersetzen, dessen Ersatzgesamtfehler den Ursprungsgesamtfehler unterschreitet. Anschließend werden die Referenzeingangsvektoren vorzugsweise abgespeichert, also als gespeicherte Referenzeingangsvektoren hinterlegt.

Besonders bevorzugt werden die beiden Bedingungen miteinander verknüpft. Insoweit wird derjenige Referenzeingangsvektor durch den neuen Referenzeingangsvektor ersetzt, der den kleinsten Ersatzgesamtfehler aufweist, jedoch lediglich dann, falls der Ersatzgesamtfehler des Referenzeingangsvektors kleiner ist als der Ursprungsgesamtfehler. Auf die beschriebene Art und Weise kann die Genauigkeit des Modells zum Ermitteln des Ausgangsvektors aus dem Eingangsvektor deutlich verbessert werden. Ganz besonders bevorzugt wird die beschriebene Vorgehensweise zum Ersetzen des Referenzeingangsvektors durch den neuen Referenzeingangsvektor nur dann durchgeführt, wenn eine Anzahl der Referenzeingangsvektoren, insbesondere eine Anzahl der gespeicherten Referenzeingangsvektoren, gleich einer festgelegten Maximalanzahl ist. Nur dann ist üblicherweise ein Austauschen bereits vorhandener Referenzeingangsvektoren notwendig.

Eine Weiterbildung der Erfindung sieht vor, dass bei Vorliegen des neuen Referenzeingangsvektors mit dem dazugehörigen neuen Referenzausgangsvektor folgende Schritte, insbesondere in der angegebenen Reihenfolge, durchgeführt werden, bevorzugt nur dann, wenn die Anzahl der Referenzeingangsvektoren kleiner als die festgelegte Maximalanzahl ist:
a. Ermitteln der Einzelfehler der Referenzeingangsvektoren;
b. Berechnen des Ursprungsgesamtfehlers als Summe aus den Einzelfehlern, insbesondere dividiert durch die Anzahl der Referenzeingangsvektoren, bevorzugt aus quadrierten Einzelfehlern,
c. Hinzufügen des neuen Referenzeingangsvektors zu den Referenzeingangsvektoren;
d. Erneutes Ermitteln der Einzelfehler der Referenzeingangsvektoren;
e. Berechnen eines neuen Ursprungsgesamtfehlers als Summe aus den Einzelfehlern, insbesondere dividiert durch die Anzahl der Referenzeingangsvektoren, bevorzugt aus quadrierten Einzelfehlern,
f. Entfernen des neuen Referenzeingangsvektors aus den Referenzeingangsvektoren bei Überschreiten des Ursprungsgesamtfehlers durch den neuen Ursprungsgesamtfehler.

Mithilfe dieser Vorgehensweise wird geprüft, ob ein Hinzufügen des neuen Referenzeingangsvektors und des dazugehörigen neuen Referenzausgangsvektors einen Genauigkeitsvorteil bietet. Hierzu werden mit der grundsätzlich bereits bekannten Vorgehensweise der Ursprungsgesamtfehler und der neue Ursprungsgesamtfehler ermittelt. Der Ursprungsgesamtfehler ergibt sich aus der Summe der Einzelfehler vor dem Hinzufügen des neuen Referenzeingangsvektors und der neue Ursprungsgesamtfehler nach dem Hinzufügen des neuen Referenzeingangsvektors.

Anhand des Ursprungsgesamtfehlers und des neuen Ursprungsgesamtfehlers wird entschieden, ob das Hinzufügen des neuen Referenzeingangsvektors zu den Referenzeingangsvektoren vorteilhaft ist oder nicht. So wird der neue Referenzeingangsvektor wieder aus den Referenzeingangsvektoren entfernt, sofern der neue Ursprungsgesamtfehler größer ist als der Ursprungsgesamtfehler. Anderenfalls wird der neue Referenzeingangsvektor als Bestandteil der Referenzeingangsvektoren beibehalten. Besonders bevorzugt wird diese Vorgehensweise durchgeführt, sofern keiner der vorhandenen Referenzeingangsvektoren durch den neuen Referenzeingangsvektor ersetzt wird, insbesondere aufgrund einer zu geringen Genauigkeit. Anschließend werden die Referenzeingangsvektoren vorzugsweise abgespeichert, also als gespeicherte Referenzeingangsvektoren hinterlegt.

Beispielsweise wird also zunächst geprüft, ob einer der vorhanden Referenzeingangsvektoren durch den neuen Referenzeingangsvektor ersetzt werden kann, nämlich auf die vorstehend beschriebene Art und Weise. Ist dies nicht der Fall, sind die entsprechenden Bedingungen also nicht erfüllt, so wird auf die beschriebene Art und Weise geprüft, ob die Aufnahme des neuen Referenzeingangsvektors in die Referenzeingangsvektoren zusätzlich zu den bereits vorhandenen Referenzeingangsvektoren Vorteile bietet. Auf die beschriebene Art und Weise kann eine besonders hohe Genauigkeit des Modells realisiert werden.

Eine Weiterbildung der Erfindung sieht vor, dass zum Ermitteln des Ausgangsvektors zu dem Eingangsvektor die folgenden Schritte durchgeführt werden:
a. Wiederholen der folgenden Schritte, insbesondere in der angegebenen Reihenfolge, bis in einem n-dimensionalen Raum, beispielsweise in einem oder mehreren Orthanten, insbesondere in jedem Orthant, des n-dimensionalen Raums, um den Eingangsvektor ein Referenzeingangsvektor vorliegt, dessen Abstand zu dem Eingangsvektor einen Schwellenwert unterschreitet, und/oder eine maximale Anzahl an Iterationen erreicht ist:
   i. Auswählen wenigstens eines Nachbarvektors aus den Referenzeingangsvektoren, und
   ii. Ermitteln eines zusätzlichen Referenzeingangsvektors aus dem wenigstens einen Nachbarvektor und Hinzufügen des zusätzlichen Referenzeingangsvektors zu den Referenzeingangsvektoren;
b. Auswählen wenigstens eines dem Eingangsvektor am nächsten liegenden Berechnungsvektors aus den Referenzeingangsvektoren und Berechnen des Ausgangsvektors anhand des wenigstens einen ausgewählten Berechnungsvektors.

Zum Ermitteln des zu dem Eingangsvektor gehörenden Ausgangsvektors aus den Referenzeingangsvektoren werden in einem ersten Schritt wenigstens ein Nachbarvektor, bevorzugt jedoch mehrere Nachbarvektoren, aus den Referenzeingangsvektoren ausgewählt. In einem zweiten Schritt wird aus diesem Nachbarvektor beziehungsweise diesen Nachbarvektoren der zusätzliche Referenzeingangsvektor ermittelt und den Referenzeingangsvektoren hinzugefügt. Durch das Hinzufügen des zusätzlichen Referenzeingangsvektors zu den Referenzeingangsvektoren wird die Auflösung des Modells verbessert, sodass die nachfolgende Berechnung des Ausgangsvektors äußerst einfach und mit hoher Genauigkeit erfolgen kann.

Das Auswählen des oder der Nachbarvektoren aus den Referenzeingangsvektoren erfolgt daher - falls möglich - vorzugsweise derart, dass der aus ihm oder ihnen ermittelte zusätzliche Referenzeingangsvektor näher an dem Eingangsvektor liegt als der oder die Nachbarvektoren oder die von dem oder den Nachbarvektoren verschiedenen Referenzeingangsvektoren. Beispielsweise wird also der dem Eingangsvektor am nächsten liegende Referenzeingangsvektor als Nachbarvektor beziehungsweise werden also die dem Eingangsvektor am nächsten liegenden Referenzeingangsvektoren als Nachbarvektoren ausgewählt.

Das Ermitteln des zusätzlichen Referenzeingangsvektors erfolgt bevorzugt durch Mittelwertbildung, beispielsweise durch gewichtete Mittelwertbildung oder durch Verwendung des arithmetischen Mittels des Nachbarvektors oder der Nachbarvektoren. Im Falle des lediglich einen Nachbarvektors entspricht der zusätzliche Referenzeingangsvektor nach der Mittelwertbildung dem Nachbarvektor. Selbstverständlich wird der zu dem zusätzlichen Referenzeingangsvektor gehörende Referenzausgangsvektor analog zu dieser Vorgehensweise aus dem dem Nachbarvektor zugeordneten Referenzausgangsvektor oder den den Nachbarvektoren zugeordneten Referenzausgangsvektoren ermittelt. Auch dem zusätzlichen Referenzeingangsvektor ist insoweit ein Referenzausgangsvektor zugeordnet, der dieselbe mathematische Dimension aufweist wie die Referenzausgangsvektoren der Referenzeingangsvektoren.

Die beiden Schritte, also der erste Schritt und der zweite Schritt, werden wiederholt, bis wenigstens ein Referenzeingangsvektor vorliegt, dessen Abstand zu dem Eingangsvektor den Schwellenwert unterschreitet, oder bis eine maximale Anzahl an Iterationen erreicht ist. Allgemeiner ausgedrückt werden die Schritte beispielsweise wiederholt, bis in dem n-dimensionalen Raum, insbesondere in einem oder mehreren der Orthanten des n-dimensionalen Raums, um den Eingangsvektor jeweils ein Referenzeingangsvektor vorliegt, der einen den Schwellenwert unterschreitenden Abstand von dem Eingangsvektor aufweist oder bis die Anzahl der Iterationen, also die Anzahl der Durchführungen der beiden Schritte, die maximale Anzahl erreicht hat. Für jede Wiederholung des ersten und des zweiten Schritts wird eine Anzahl an Iterationen inkrementiert. Erreicht diese Anzahl die maximale Anzahl, so ist die Bedingung erfüllt und die beiden Schritte werden nicht erneut wiederholt.

Die letztgenannte Bedingung verhindert insbesondere eine beliebig häufige Ausführung, falls der zusätzliche Referenzeingangsvektor dem Eingangsvektor nicht näher liegt als die ursprünglichen Referenzeingangsvektoren. Es ist darauf hinzuweisen, dass unabhängig von der Anzahl der Referenzeingangsvektoren und von der Anzahl der Nachbarvektoren stets der zusätzliche Referenzeingangsvektor ermittelt wird, nämlich durch Mittelwertbildung, und auch stets zu den Referenzvektoren hinzugefügt wird. Dies gilt also auch, sofern gar kein oder lediglich ein einziger Referenzeingangsvektor vorliegt. Der zusätzliche Referenzeingangsvektor wird in dem zweiten Fall üblicherweise dem bereits vorhandenen Referenzeingangsvektor entsprechen, sodass nachfolgend zwei identische Referenzeingangsvektoren vorhanden sind, aus welchen der wenigstens eine Berechnungsvektor ausgewählt wird.

Der n-dimensionale Raum spannt sich um den Eingangsvektor herum auf. Der Eingangsvektor stellt also einen Nullpunkt des n-dimensionalen Raums dar. Die Orthanten grenzen jeweils an den Eingangsvektor beziehungsweise den Nullpunkt an und liegen nicht überlappend zu diesem vor. Der n-dimensionale Raum ist hierbei in 2ⁿ Orthanten unterteilt beziehungsweise unterteilbar. Im Fall des zweidimensionalen Raums können die Orthanten als Quadranten und im Falle des dreidimensionalen Raums als Oktanten bezeichnet werden. Besonders bevorzugt werden die genannten Schritte solange wiederholt, bis in mehreren der Orthanten, insbesondere in jedem der Orthanten, jeweils ein Referenzeingangsvektor angeordnet ist, der einen Abstand zu dem Eingangsvektor aufweist, der kleiner ist als der Schwellenwert.

Ist die genannte Bedingung erfüllt oder die maximale Anzahl an Iterationen erreicht, so werden der oder die Berechnungsvektoren aus den Referenzeingangsvektoren ausgewählt, nämlich derart, dass der oder die Berechnungsvektoren der oder die dem Eingangsvektor am nächsten liegenden Referenzeingangsvektoren sind. Beispielsweise werden der oder die Berechnungsvektoren für mehrere der Orthanten ausgewählt. In anderen Worten werden aus den Referenzeingangsvektoren derjenige oder diejenigen ausgewählt, der oder die dem Eingangsvektor am nächsten liegen und der oder die ausgewählten Referenzeingangsvektoren als Berechnungsvektoren herangezogen. Das Auswählen des oder der Berechnungsvektoren aus den Referenzeingangsvektoren erfolgt zum Beispiel derart, dass wenigstens einige der ausgewählten Berechnungsvektoren in unterschiedlichen Orthanten liegen.

Besonders bevorzugt werden die Berechnungsvektoren derart aus den Referenzeingangsvektoren ausgewählt, dass in mehreren der Orthanten jeweils genau einer der Berechnungsvektoren liegt. Ganz besonders bevorzugt wird für jeden der Orthanten genau ein Berechnungsvektor aus den Referenzeingangsvektoren ausgewählt, sodass in jedem der Orthanten genau ein Berechnungsvektor liegt. Anschließend wird aus dem oder den ausgewählten Berechnungsvektoren der Ausgangsvektor berechnet. Dies kann grundsätzlich auf beliebige Art und Weise erfolgen. Beispielsweise kann es vorgesehen sein, den Ausgangsvektor gleich dem Referenzausgangsvektor desjenigen der Berechnungsvektoren zu setzen, der dem Eingangsvektor am nächsten liegt. Vorzugsweise erfolgt jedoch wiederum eine Mittelwertbildung, beispielsweise unter Verwendung des arithmetischen Mittels oder der inversen Distanzwichtung.

Mit der beschriebenen Vorgehensweise zum Betreiben des Steuergeräts lässt sich auf besondere Art und Weise der zu dem Eingangsvektor gehörende Ausgangsvektor ermitteln. Insbesondere ist die hierzu notwendige Rechenleistung äußerst gering. Auch ist es mit geringer Rechenleistung möglich, dem Modell wenigstens einen zusätzlichen Referenzeingangsvektor und den jeweils dazugehörigen Referenzausgangsvektor hinzuzufügen und so das Modell zu verbessern. Das Verbessern des Modells wird daher bevorzugt während eines Betriebs des Steuergeräts, insbesondere während eines Fahrbetriebs des Kraftfahrzeugs vorgenommen.

Besonders bevorzugt ist es vorgesehen, dass für die Referenzeingangsvektoren ein Wertebereich erfasst wird. Der Wertebereich enthält für wenigstens eine Komponente der Referenzeingangsvektoren den minimalen Wert und den maximalen Wert, den die jeweilige Komponente über alle Referenzeingangsvektoren hinweg aufweist. Bevorzugt wird der Wertebereich für alle Komponenten der Referenzeingangsvektoren ermittelt. Bevorzugt werden die Komponenten der Referenzeingangsvektoren zumindest teilweise in normierter Form verwendet. Hierunter ist zu verstehen, dass der Wert jeder Komponente der Referenzeingangsvektoren mit der Differenz zwischen dem maximalen Wert und dem minimalen Wert der jeweiligen Komponente normiert wird.

Dieser normierte Wert wird dann beispielsweise bei dem Auswählen des wenigstens einen Nachbarvektors, insbesondere bei dem Berechnen des Abstands der Referenzeingangsvektoren zu dem Eingangsvektor, und/oder dem Berechnen des Ausgangswerts, insbesondere bei der inversen Distanzwichtung, herangezogen. Für das Auswählen des wenigstens einen Nachbarvektors erfolgt bevorzugt auch ein Normieren der Komponenten des Eingangsvektors mit den Wertebereichen der Referenzeingangsvektoren. Durch das Verwenden der normierten Komponenten wird eine unerwünschte Beeinflussung durch unterschiedliche Größenordnungen der Komponenten des Eingangsvektors beziehungsweise der Referenzeingangsvektoren verhindert. Ohne die Normierung würden Komponenten, die eine größere Größenordnung aufweisen, eine deutliche stärkere Gewichtung erfahren als Komponenten, die eine kleinere Größenordnung aufweisen.

Eine Weiterbildung der Erfindung sieht vor, dass die Referenzeingangsvektoren vor dem Ermitteln des Ausgangsvektors für den Eingangsvektor auf gespeicherte Referenzeingangsvektoren zurückgesetzt werden. Vor der zuvor beschriebenen Vorgehensweise, bei welcher den Referenzeingangsvektoren wenigstens ein zusätzlicher Referenzeingangsvektor hinzugefügt wird, werden also die Referenzeingangsvektoren zurückgesetzt. Hierzu werden gespeicherte Referenzeingangsvektoren ausgelesen, insbesondere aus dem Speicher, und als die Referenzeingangsvektoren verwendet. Das bedeutet, dass eventuell zuvor den Referenzeingangsvektoren hinzugefügte zusätzliche Referenzeingangsvektoren verworfen werden. Hierdurch wird eine Beeinflussung des Ergebnisses beziehungsweise des Ausgangsvektors zuverlässig vermieden.

Eine Weiterbildung der Erfindung sieht vor, dass für das Auswählen des wenigstens einen Nachbarvektors für jeden Referenzeingangsvektor ein Klassifikationsvektor ermittelt wird, der sich aus der Vorzeichenfunktion einer Differenz zwischen dem Eingangsvektor und dem jeweiligen Referenzeingangsvektor ergibt. Für jeden Referenzeingangsvektor wird also zunächst der entsprechende Klassifikationsvektor berechnet, nämlich durch Bildung der Differenz zwischen dem Eingangsvektor und dem jeweiligen Referenzeingangsvektor. Die Differenz wird nachfolgend noch der Vorzeichenfunktion unterworfen, sodass der Klassifikationsvektor schlussendlich lediglich angibt, in welcher Richtung der Referenzeingangsvektor bezüglich des Eingangsvektors liegt. Die Komponenten des Klassifikationsvektors können jeweils die Werte - 1,0 und +1 annehmen. Für jede Komponente ergeben sich also drei mögliche Klassifikationen. Hierdurch ist eine besonders einfache und rasche Auswahl der Nachbarvektoren möglich.

Für jeden der Referenzeingangsvektoren liegt ein Klassifikationsvektor vor, sodass die Anzahl der Klassifikationsvektoren der Anzahl der Referenzeingangsvektoren entspricht. Für die Klassifikationsvektoren gilt insoweit das für die Referenzeingangsvektoren Gesagte. Auch die Klassifikationsvektoren bilden eine Menge an Klassifikationsvektoren, die eine beliebige Anzahl an Klassifikationsvektoren enthalten kann, also überhaupt keine Klassifikationsvektoren, genau einen Klassifikationsvektor oder mehrere Klassifikationsvektoren.

Eine Weiterbildung der Erfindung sieht vor, dass aus den Klassifikationsvektoren unterschiedliche Klassifikationsvektoren ermittelt werden und für unterschiedliche Klassifikationsvektoren, insbesondere für jeden unterschiedlichen Klassifikationsvektor, jeweils genau ein Referenzeingangsvektor als Nachbarvektor ausgewählt wird. Zunächst werden also die Klassifikationsvektoren daraufhin untersucht, ob sie voneinander verschieden sind und es werden voneinander verschiedene Klassifikationsvektoren zusammengestellt. Beispielsweise werden die Referenzeingangsvektoren hinsichtlich ihrer Klassifikationsvektoren sortiert.

Nachfolgend wird für unterschiedliche Klassifikationsvektoren jeweils genau ein Referenzeingangsvektor als Nachbarvektor ausgewählt. Das bedeutet, dass die ausgewählten Nachbarvektoren voneinander verschiedene Klassifikationsvektoren aufweisen. Besonders bevorzugt wird für jeden unterschiedlichen Klassifikationsvektor jeweils genau ein Referenzeingangsvektor ausgewählt. Es liegen also nachfolgend ebenso viele Nachbarvektoren vor wie unterschiedliche Klassifikationsvektoren. Es können also genau ein Nachbarvektor oder mehrere Nachbarvektoren vorliegen. Hierdurch wird eine besonders hohe Genauigkeit bei dem Ermitteln des Ausgangsvektors erzielt.

Vereinfacht ausgedrückt ist es vorgesehen, dass für mehrere der Orthanten, insbesondere für jeden der Orthanten, jeweils genau ein Nachbarvektor aus den Referenzeingangsvektoren ausgewählt wird. Die Klassifikationsvektoren geben schlussendlich an, in welchem der Orthanten jeder der Referenzeingangsvektoren angeordnet ist. Beispielsweise werden hierbei die Werte 0 und +1 von Komponenten des Klassifikationsvektors zusammengefasst. Einer der Orthant beinhaltet also die Klassifikationsvektoren auf, deren Komponente den Wert -1 aufweist, wohingegen ein anderer der Orthanten die Klassifikationsvektoren beinhaltet, deren Komponente einen der Werte 0 und +1 aufweist.

Durch das Auswählen der Nachbarvektoren derart, dass den Referenzeingangsvektoren unterschiedliche Klassifikationsvektoren zugeordnet sind, liegen die ausgewählten Nachbarvektoren in voneinander verschiedenen Orthanten, sodass in mehreren der Orthanten jeweils genau ein Nachbarvektor vorliegt, wohingegen in den übrigen Orthanten kein Nachbarvektor vorliegt. Besonders bevorzugt ist es auch hier vorgesehen, dass in jedem der Orthanten jeweils genau ein Nachbarvektor beziehungsweise einer der Nachbarvektoren vorliegt. Dies ist jedoch eine vereinfachte Betrachtungsweise. Bevorzugt werden alle möglichen Werte der Komponente unterschieden. Durch die beschriebene Vorgehensweise wird die bereits angesprochene hohe Genauigkeit erzielt.

Eine Weiterbildung der Erfindung sieht vor, dass aus den Referenzeingangsvektoren, deren Klassifikationsvektoren identisch sind, derjenige als Nachbarvektor ausgewählt wird, der den geringsten Abstand zu dem Eingangsvektor aufweist. Sind also Referenzeingangsvektoren vorhanden, die gleiche Klassifikationsvektoren aufweisen, so wird für diese jeweils der Abstand zu dem Eingangsvektor bestimmt. Anschließend wird aus den Abständen der geringste Abstand ermittelt und der Referenzeingangsvektor, der den kleinsten Abstand zu dem Eingangsvektor aufweist, als Nachbarvektor herangezogen. Hierdurch wird eine besonders hohe Genauigkeit erzielt. Die beschriebene Klassifikation der Referenzeingangsvektoren mittels der Klassifikationsvektoren wird vorzugsweise nach jedem Hinzufügen eines zusätzlichen Referenzeingangsvektors zu den Referenzeingangsvektoren durchgeführt.

Wiederum vereinfacht betrachtet, ist es vorgesehen, dass für die Orthanten, insbesondere für jeden der Orthanten, der dem Eingangsvektor in dem jeweiligen Orthant am nächsten liegende Referenzeingangsvektor als Nachbarvektor ausgewählt wird. Die Referenzeingangsvektoren sind also auf die Orthanten aufgeteilt. Liegen mehrere Referenzeingangsvektoren in demselben Orthant, so wird für diese der jeweilige Abstand zu dem Eingangsvektor ermittelt.

Derjenige Referenzeingangsvektor mit dem geringsten Abstand in dem jeweiligen Orthant wird als Nachbarvektor herangezogen. Besonders bevorzugt wird diese Vorgehensweise für alle Orthanten durchgeführt, sodass vorzugsweise in jedem der Orthanten einer der Referenzeingangsvektoren als Nachbarvektor vorliegt. Selbstredend gilt dies jedoch lediglich für den Fall, dass in jedem der Orthanten tatsächlich ein Referenzeingangsvektor vorliegt. In dem oder den Orthanten, in welchem/welchen kein Referenzeingangsvektor vorliegt, kann entsprechend auch kein Nachbarvektor aus den Referenzeingangsvektoren ausgewählt werden.

Eine Weiterbildung der Erfindung sieht vor, dass der Abstand berechnet wird, indem Komponenten der Referenzeingangsvektoren mit Komponenten des Eingangsvektors normiert und aufsummiert werden. Jede Komponente des Referenzeingangsvektors wird also mit der entsprechenden Komponente des Eingangsvektors normiert. Nachfolgend werden die normierten Komponenten der Referenzeingangsvektoren aufsummiert, um die Abstände der Referenzeingangsvektoren zu dem Eingangsvektor zu bestimmen. Es kann zudem vorgesehen sein, die Komponenten vor dem Aufsummieren zu quadrieren, um eine Vorzeichenbereinigung zu erzielen. In diesem Fall entspricht der Abstand bevorzugt der Wurzel aus der Summe der Komponenten des jeweiligen Referenzeingangsvektors. Auf die beschriebene Art und Weise kann die Auswahl der Nachbarvektoren besonders rasch und effektiv vorgenommen werden.

Eine Weiterbildung der Erfindung sieht vor, dass der Referenzausgangsvektor des zusätzlichen Referenzeingangsvektors aus den Referenzausgangsvektoren der Nachbarvektoren berechnet wird, insbesondere durch Mittelwertbildung oder mittels inverser Distanzwichtung. Auf diese Vorgehensweise wurde vorstehend bereits hingewiesen. Auch dem zusätzlichen Referenzeingangsvektor ist insoweit der Referenzausgangsvektor zugeordnet. Der Referenzausgangsvektor des zusätzlichen Referenzeingangsvektors wird aus den Referenzausgangsvektoren der Nachbarvektoren ermittelt.

Beispielsweise kann es hierbei vorgesehen sein, den Referenzausgangsvektor des zusätzlichen Referenzeingangsvektors gleich dem Referenzausgangsvektor desjenigen der Nachbarvektoren zu setzen, welcher den geringsten Abstand zu dem Referenzeingangsvektor aufweist. Eine deutliche Erhöhung der Genauigkeit kann jedoch erzielt werden, indem die Referenzausgangsvektoren mehrerer der Nachbarvektoren, insbesondere aller Nachbarvektoren, zum Ermitteln des Referenzausgangsvektors herangezogen werden. Beispielsweise ergibt sich der Referenzausgangsvektor des zusätzlichen Referenzeingangsvektors durch Mittelwertbildung, insbesondere durch Bildung des arithmetischen Mittels, aus den Referenzausgangsvektoren der Nachbarvektoren.

Eine Weiterbildung der Erfindung sieht vor, dass der Ausgangsvektor aus dem dem wenigstens einen Berechnungsvektor zugeordneten Referenzausgangsvektor berechnet wird, insbesondere durch Mittelwertbildung oder mittels inverser Distanzwichtung. Für die Berechnung des Ausgangsvektors gilt insoweit Entsprechendes wie für die Berechnung des Referenzausgangsvektors des zusätzlichen Referenzeingangsvektors. Bevorzugt wird unabhängig von der Anzahl der ausgewählten Berechnungsvektoren der Ausgangsvektor aus allen Berechnungsvektoren beziehungsweise den ihnen zugeordneten Referenzausgangsvektoren berechnet. Auf die entsprechenden Ausführungen wird daher verwiesen.

Schlussendlich ist es bei dem beschriebenen Verfahren vorgesehen, zunächst iterativ zusätzliche Referenzeingangsvektoren zu ermitteln, welche hinreichend nah an dem Eingangsvektor liegen. Dies erfolgt besonders bevorzugt durch Interpolation zwischen den vorhandenen Referenzeingangsvektoren, insbesondere den gespeicherten Referenzeingangsvektoren. Das iterative Hinzufügen der zusätzlichen Referenzeingangsvektoren erfolgt solange, bis wenigstens ein Referenzeingangsvektor einen hinreichend kleinen Abstand zu dem Eingangsvektor aufweist, oder bis die maximale Anzahl an Iterationen erreicht ist.

Bevorzugt liegen mehrere Referenzeingangsvektoren vor, deren Abstand zu dem Eingangsvektor den Schwellenwert unterschreiten. Besonders bevorzugt wird für jeden der Orthanten ein derartiger Referenzeingangsvektor ermittelt, falls dies möglich ist. Insbesondere muss hierzu bereits vor dem Hinzufügen des wenigstens einen zusätzlichen Referenzeingangsvektors in jedem der Orthanten mindestens ein Referenzeingangsvektor vorliegen. Dies ermöglicht die besonders gute Genauigkeit bei der Ermittlung des Ausgangsvektors.

Die Erfindung betrifft weiterhin eine Antriebseinrichtung für ein Kraftfahrzeug mit den Merkmalen des Anspruchs 10.

Auf die Vorteile einer derartigen Ausgestaltung der Antriebseinrichtung beziehungsweise einer derartigen Vorgehensweise wurde bereits hingewiesen. Sowohl die Antriebseinrichtung als auch das Verfahren zu deren Betreiben können gemäß den Ausführungen im Rahmen dieser Beschreibung weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Antriebseinrichtung für ein Kraftfahrzeug, mit einem Antriebsaggregat und einem Steuergerät, sowie
- Figur 2: ein Diagramm, anhand welchem ein Verfahren zum Betreiben des Steuergeräts erläutert wird.

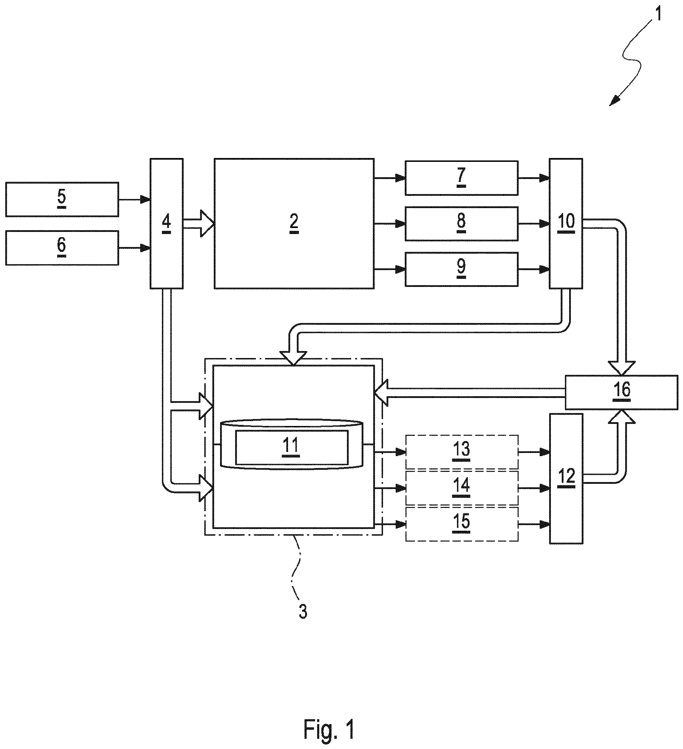

Die Figur 1 zeigt eine schematische Darstellung einer Antriebseinrichtung 1 für ein Kraftfahrzeug, welche ein Antriebsaggregat 2 sowie ein Steuergerät 3 zum Steuern des Antriebsaggregats 2 aufweist. Das Antriebsaggregat 2 liegt bevorzugt in Form einer Brennkraftmaschine vor. An dem Antriebsaggregat 2 wird ein Eingangsvektor 4 eingestellt, welcher sich in dem hier dargestellten Ausführungsbeispiel beispielsweise aus einer Solldrehzahl 5 und wenigstens einem Einspritzparameter 6 zusammensetzt. Der Einspritzparameter 6 ist beispielsweise eine einzuspritzende Kraftstoffmenge, ein Einspritzzeitpunkt oder dergleichen.

Der Betrieb des Antriebsaggregats 2 erfolgt insoweit auf Grundlage der Solldrehzahl 5 und des Einspritzparameters 6. Aus dem Betrieb des Antriebsaggregats 2 resultieren ein Messwert 7 für ein Drehmoment, ein Messwert 8 für einen Kraftstoffverbrauch sowie ein Messwert 9 für Emissionen. Die Messwerte 7, 8 und 9 für das Drehmoment, den Kraftstoffverbrauch und die Emissionen bilden zusammen einen Istwert 10 oder jeweils einen Istwert 10. In ersterem Fall kann der Istwert 10 auch als Istwertvektor bezeichnet werden.

Der Eingangsvektor 4 wird nicht nur dem Antriebsaggregat 2, sondern zusätzlich auch dem Steuergerät 3 als Eingangsgröße bereitgestellt. In dem Steuergerät 3 sind in einem Speicher 11 mehrere n-dimensionale Referenzeingangsvektoren hinterlegt, welchen jeweils ein Referenzausgangsvektor zugeordnet ist. Der Referenzeingangsvektor ist von demselben Typ wie der Eingangsvektor 4 und der Referenzausgangsvektor ist vom selben Typ wie der Istwert 10.

Auf Grundlage der Referenzeingangsvektoren ermittelt das Steuergerät 3 aus dem Eingangsvektor 4 einen Ausgangsvektor 12, welcher einen Modellwert 13 für das Drehmoment, einen Modellwert 14 für den Kraftstoffverbrauch und einen Modellwert 15 für die Emissionen enthält. Es kann nun vorgesehen sein, dass die Istwerte 10 unmittelbar an das Steuergerät 3 zurückgeführt werden. Es kann jedoch auch vorgesehen sein, dass zunächst aus dem Istwert 10 und dem Ausgangsvektor 12 eine Differenz 16 gebildet wird, welche anschließend an das Steuergerät 3 zurückgegeben wird.

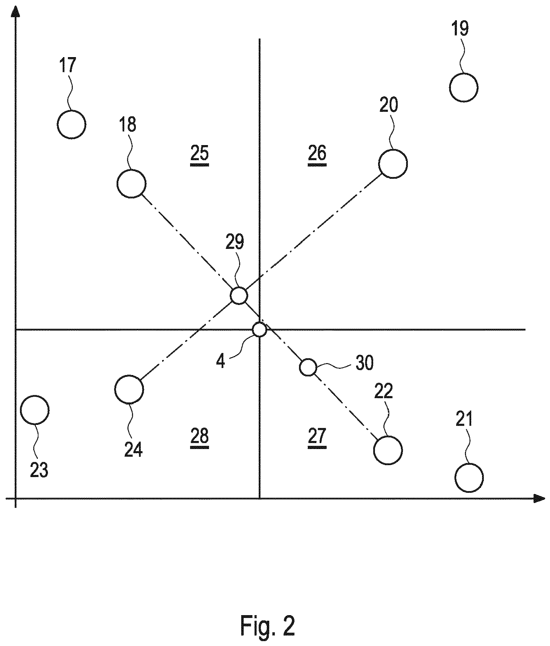

Die Figur 2 zeigt ein Diagramm, anhand welchem ein Verfahren zum Betreiben des Steuergeräts 3 exemplarisch erläutert wird. Gezeigt sind Referenzeingangsvektoren 17 bis 24, welchen jeweils ein Referenzausgangsvektor zugeordnet ist. Zusätzlich angedeutet ist der Eingangsvektor 4. Ein n-dimensionaler Raum um den Eingangsvektor 4 wird beispielsweise in Orthanten 25, 26, 27 und 28 aufgeteilt. In dem hier beispielhaft dargestellten zweidimensionalen Raum können die Orthanten 25, 26, 27 und 28 auch als Quadranten bezeichnet werden. In jedem Fall gehen die Orthanten 25 bis 28 von dem Eingangsvektor 4 aus. Es ist erkennbar, dass (rein beispielhaft) in jedem der Orthanten 25 bis 28 mehrere der Referenzeingangsvektoren 17 bis 24 vorliegen.

Bevorzugt ist es vorgesehen, dass für die Referenzeingangsvektoren 17 bis 24 jeweils ein Klassifikationsvektor ermittelt wird und die Referenzeingangsvektoren 17 bis 24 anhand der Klassifikationsvektoren klassifiziert werden. Schlussendlich kann auf diese Art und Weise eine genauere Aufteilung erfolgen als durch die bloße Aufteilung der Referenzeingangsvektoren 17 bis 24 auf die Orthanten 25, 26, 27 und 28, weil für jede Komponente der Klassifikationsvektoren die Werte -1, 0 und +1 zum Klassifizieren verwendet werden, sodass sich für jede Komponente drei mögliche Klassen ergeben. Die Referenzeingangsvektoren 17 bis 24 werden anhand der Klassifikationsvektoren derart klassifiziert, dass Referenzeingangsvektoren 17 bis 24 mit identischen Klassifikationsvektoren in derselben Klasse vorliegen. Alle Referenzeingangsvektoren 17 bis 24, die den gleichen Klassifikationsvektoren aufweisen, werden also derselben Klasse zugeordnet. Insgesamt liegen also ebenso viele Klassen vor wie unterschiedliche Klassifikationsvektoren.

Aus den Referenzeingangsvektoren 17 bis 24 werden Nachbarvektoren ausgewählt, wobei unter diesen insbesondere die in jeder der Klassen oder in jedem der Orthanten 25 bis 28 den dem Eingangsvektor 4 am nächsten liegenden der Referenzeingangsvektoren 17 bis 24 verstanden werden. In dem hier vorliegenden Ausführungsbeispiel werden die Referenzeingangsvektoren 18, 20, 22 und 24 als Nachbarvektoren herangezogen.

Aus den Nachbarvektoren 18, 20, 22 und 24 wird nun ein zusätzlicher Referenzeingangsvektor 29 mitsamt dem dazugehörigen zusätzlichen Referenzausgangsvektor ermittelt. Beispielsweise entspricht der Referenzeingangsvektor 29 dem arithmetischen Mittelpunkt zwischen den Nachbarvektoren 18, 20, 22 und 24. Er liegt in dem hier dargestellten Beispiel auf einem Schnittpunkt von Geraden, wobei eine der Geraden durch die Referenzeingangsvektoren 18 und 22 und eine zweite der Geraden durch die Referenzeingangsvektoren 20 und 24 erläuft. Es ist erkennbar, dass der Referenzeingangsvektor 29 näher an dem Eingangsvektor 4 liegt als die bisherigen Referenzeingangsvektoren 17 bis 24.

Erneut werden nun die dem Eingangsvektor 4 am nächsten liegenden Referenzeingangsvektoren 17 bis 24 und 29 als Nachbarvektoren herangezogen, wobei hierzu bevorzugt das vorstehend beschriebene Klassifizieren erneut durchgeführt wird. Dies sind die Referenzeingangsvektoren 20, 22, 24 und 29. Aus diesen wird ein weiterer zusätzlicher Referenzeingangsvektor 30 bestimmt, der den Referenzeingangsvektoren hinzugefügt wird. Diese Vorgehensweise wird wiederholt, bis wenigstens einer der Referenzeingangsvektoren 17 bis 24, 29 und 30 einen Abstand zu dem Eingangsvektor 4 aufweist, welcher kleiner ist als ein Schwellenwert. Besonders bevorzugt wird die Vorgehensweise jedoch wiederholt, bis für jede Klasse beziehungsweise in jedem der Orthanten 25 bis 28 jeweils ein Referenzeingangsvektor 17 bis 24, 29 und 30 vorliegt, welcher diese Bedingungen erfüllt.

Anschließend werden aus den Referenzeingangsvektoren 17 bis 24, 29 und 30 diejenigen als Berechnungsvektoren ausgewählt, welche dem Eingangsvektor 4 am nächsten liegen. Besonders bevorzugt wird für jede der Klassen beziehungsweise aus jedem der Orthanten 25 bis 28 einer der Referenzeingangsvektoren 17 bis 24, 29 und 30 als Berechnungsvektor herangezogen. Aus diesen Berechnungsvektoren und den ihnen zugeordneten Referenzausgangsvektoren wird nun der Ausgangsvektor berechnet, insbesondere durch Mittelwertbildung oder mittels inverser Distanzwichtung.

Die beschriebene Vorgehensweise ermöglicht nicht nur ein rasches Zuordnen des Ausgangsvektors zu dem Eingangsvektor, sondern zusätzlich ein Verbessern des Modells, insbesondere ein Hinzufügen oder Ersetzen der Referenzeingangsvektoren 17 bis 24 mit weiteren Referenzeingangsvektoren und den dazugehörigen Referenzausgangsvektoren. Es ist also insbesondere nicht notwendig, eine rechenaufwändige Bayes'sche Regression durchzuführen. Vielmehr ist das Anwenden und Verbessern des Modells im Rahmen eines normalen Betriebs der Antriebseinrichtung 1 möglich und vorgesehen.

### BEZUGSZEICHENLISTE:

- 1: Antriebseinrichtung
- 2: Antriebsaggregat
- 3: Steuergerät
- 4: Eingangsvektor
- 5: Solldrehzahl
- 6: Einspritzparameter
- 7: Drehmoment
- 8: Kraftstoffverbrauch
- 9: Emissionen
- 10: Messwert
- 11: Speicher
- 12: Ausgangsvektor
- 13: Modellart
- 14: Modellart
- 15: Modellart
- 16: Differenz
- 17: Referenzeingangsvektor
- 18: Referenzeingangsvektor
- 19: Referenzeingangsvektor
- 20: Referenzeingangsvektor
- 21: Referenzeingangsvektor
- 22: Referenzeingangsvektor
- 23: Referenzeingangsvektor
- 24: Referenzeingangsvektor
- 25: Orthant
- 26: Orthant
- 27: Orthant
- 28: Orthant
- 29: Referenzeingangsvektor
- 30: Referenzeingangsvektor

## Patentansprüche

1. Verfahren zum Betreiben einer Antriebseinrichtung (1) für ein Kraftfahrzeug, welche ein Steuergerät (3) und ein Antriebsaggregat (2) aufweist und mit Hilfe des Steuergeräts (3) angesteuert wird, wobei n-dimensionalen Referenzeingangsvektoren (17, 18, 19, 20, 21, 22, 23, 24) jeweils ein Referenzausgangsvektor zugeordnet ist, welche Referenzvektoren in dem Steuergerät (3) hinterlegt sind und aus welchen zumindest zu einem Betriebsparameter für das Antriebsaggregat (2) des Kraftfahrzeugs aufweisenden n-dimensionalen Eingangsvektor (4) ein Ausgangsvektor (12) ermittelbar ist, **dadurch gekennzeichnet, dass** bei Vorliegen eines neuen Referenzeingangsvektors mit dazugehörigem neuen Referenzausgangsvektor mittels des Steuergeräts (3) folgende Schritte in der angegebenen Reihenfolge durchgeführt werden:
a. Ermitteln eines Einzelfehlers der Referenzeingangsvektoren (17, 18, 19, 20, 21, 22, 23, 24), der die Genauigkeit beschreibt, mit welcher der Referenzausgangsvektor eines der Referenzeingangsvektoren (17, 18, 19, 20, 21, 22, 23, 24) aus den anderen Referenzeingangsvektoren (17, 18, 19, 20, 21, 22, 23, 24) und den ihnen zugeordneten Referenzausgangsvektoren ermittelt werden kann, ohne auf den einen Referenzeingangsvektor (17, 18, 19, 20, 21, 22, 23, 24) und seinen Referenzausgangsvektor zurückzugreifen;
b. Zwischenspeichern des Referenzeingangsvektors (17, 18, 19, 20, 21, 22, 23, 24) mit dem kleinsten Einzelfehler und Entfernen dieses Referenzeingangsvektors (17, 18, 19, 20, 21, 22, 23, 24) aus den Referenzeingangsvektoren (17, 18, 19, 20, 21, 22, 23, 24);
c. Berechnen des Ausgangsvektors (12) mit dem neuen Referenzeingangsvektor als Eingangsvektor (4);
d. Ermitteln des Einzelfehlers aus einer Differenz zwischen dem Ausgangsvektor (12) und dem dem neuen Referenzeingangsvektor zugeordneten Referenzausgangsvektor;
e. Hinzufügen des entfernten Referenzeingangsvektors (17, 18, 19, 20, 21, 22, 23, 24) zu den Referenzeingangsvektoren (17, 18, 19, 20, 21, 22, 23, 24);
f. Ersetzen des Referenzeingangsvektors (17, 18, 19, 20, 21, 22, 23, 24) mit dem kleinsten Einzelfehler durch den neuen Referenzeingangsvektor, falls der Einzelfehler des neuen Referenzeingangsvektors größer ist als der kleinste Einzelfehler; wobei
g. dem Antriebsaggregat (2) und dem Steuergerät (3) derselbe Eingangsvektor (4) zugeführt wird, welcher den zumindest einen Betriebsparameter für das Antriebsaggregat (2) aufweist, wobei das Antriebsaggregat (2) anhand des zumindest einen Betriebsparameters betrieben wird und das Steuergerät (3) aus dem Eingangsvektor (4) den Ausgangsvektor (12) ermittelt, und wobei ein gemessener Messwert, der eine Ausgangsgröße des Antriebsaggregats (2) darstellt, mit dem Ausgangsvektor (12) verglichen und bei einer Abweichung auf einen Fehler des Antriebsaggregats (2) erkannt und/oder der Eingangsvektor (4) derart angepasst wird, dass der Messwert dem Ausgangsvektor (12) entspricht.

2. Verfahren nach Anspruch 1, **dadurch gekennzeichnet, dass** zum Ermitteln von Einzelfehlern der Referenzeingangsvektoren (17, 18, 19, 20, 21, 22, 23, 24) für jeden der Referenzeingangsvektoren (17, 18, 19, 20, 21, 22, 23, 24) folgende Schritte durchgeführt werden:
a. Zwischenspeichern des jeweiligen Referenzeingangsvektors (17, 18, 19, 20, 21, 22, 23, 24) als Prüfvektor und Entfernen des Referenzeingangsvektors (17, 18, 19, 20, 21, 22, 23, 24) aus den Referenzeingangsvektoren (17, 18, 19, 20, 21, 22, 23, 24);
b. Berechnen des Ausgangsvektors (12) mit dem Prüfvektor als Eingangsvektor (4);
c. Ermitteln des jeweiligen Einzelfehlers aus einer Differenz zwischen dem Ausgangsvektor (12) und dem dem Prüfvektor zugeordneten Referenzausgangsvektor;
d. Zuordnen des jeweiligen Einzelfehlers zu dem Prüfvektor; und
e. Hinzufügen des Prüfvektors zu den Referenzeingangsvektoren (17, 18, 19, 20, 21, 22, 23, 24).

3. Verfahren nach einem der vorhergehenden Ansprüche, **dadurch gekennzeichnet, dass** zum Optimieren der Referenzeingangsvektoren (17, 18, 19, 20, 21, 22, 23, 24) die folgenden Schritte durchgeführt werden:
a. Ermitteln der Einzelfehler der Referenzeingangsvektoren (17, 18, 19, 20, 21, 22, 23, 24);
b. Berechnen eines Ursprungsgesamtfehlers aus den Einzelfehlern;
c. Durchführen der folgenden Schritte für jeden der Referenzeingangsvektoren (17, 18, 19, 20, 21, 22, 23, 24):
i. Entfernen des jeweiligen Referenzeingangsvektors (17, 18, 19, 20, 21, 22, 23, 24) aus den Referenzeingangsvektoren (17, 18, 19, 20, 21, 22, 23, 24),
ii. Ermitteln des Einzelfehlers jedes der verbleibenden Referenzeingangsvektoren (17, 18, 19, 20, 21, 22, 23, 24),
iii. Berechnen eines Reduktionsgesamtfehlers der reduzierten Referenzeingangsvektoren (17, 18, 19, 20, 21, 22, 23, 24) aus den Einzelfehlern der verbleibenden Referenzeingangsvektoren (17, 18, 19, 20, 21, 22, 23, 24),
iv. Zuordnen des Reduktionsgesamtfehlers zu den entfernten Referenzeingangsvektor (17, 18, 19, 20, 21, 22, 23, 24),
v. Hinzufügen des entfernten Referenzeingangsvektors (17, 18, 19, 20, 21, 22, 23, 24) zu den Referenzeingangsvektoren (17, 18, 19, 20, 21, 22, 23, 24);
d. Entfernen des Referenzeingangsvektors (17, 18, 19, 20, 21, 22, 23, 24) mit dem kleinsten Reduktionsgesamtfehler und/oder mit einem dem Ursprungsgesamtfehler unterschreitenden Reduktionsgesamtfehler aus den Referenzeingangsvektoren (17, 18, 19, 20, 21, 22, 23, 24).

4. Verfahren nach einem der vorhergehenden Ansprüche, **dadurch gekennzeichnet, dass** bei Vorliegen eines Referenzeingangsvektors (17, 18, 19, 20, 21, 22, 23, 24) in den Referenzeingangsvektoren (17, 18, 19, 20, 21, 22, 23, 24), der dem neuen Referenzeingangsvektor entspricht, der neue Referenzausgangsvektor aus dem dem entsprechenden Referenzeingangsvektor (17, 18, 19, 20, 21, 22, 23, 24) zugeordneten Referenzausgangsvektor und dem neuen Referenzausgangsvektor ermittelt wird.

5. Verfahren nach Anspruch 4, **dadurch gekennzeichnet, dass** der neue Referenzausgangsvektor durch Mittelwertbildung aus dem Referenzausgangsvektor und dem neuen Referenzausgangsvektor ermittelt wird.

6. Verfahren nach einem der vorhergehenden Ansprüche, **dadurch gekennzeichnet, dass** das Ersetzen des Referenzeingangsvektors (17, 18, 19, 20, 21, 22, 23, 24) mit dem neuen Referenzeingangsvektor nur dann durchgeführt wird, wenn eine Anzahl der Referenzeingangsvektoren (17, 18, 19, 20, 21, 22, 23, 24) gleich einer festgelegten Maximalanzahl ist.

7. Verfahren nach einem der vorhergehenden Ansprüche, **dadurch gekennzeichnet, dass** bei Vorliegen des neuen Referenzeingangsvektors mit dem dazugehörigen neuen Referenzausgangsvektor folgende Schritte durchgeführt werden:
a. Ermitteln der Einzelfehler der Referenzeingangsvektoren (17, 18, 19, 20, 21, 22, 23, 24);
b. Berechnen des Ursprungsgesamtfehlers als Summe aus den Einzelfehlern;
c. Hinzufügen des neuen Referenzeingangsvektors zu den neuen Referenzeingangsvektoren (17, 18, 19, 20, 21, 22, 23, 24);
d. Erneutes Ermitteln der Einzelfehler der Referenzeingangsvektoren (17, 18, 19, 20, 21, 22, 23, 24);
e. Berechnen eines neuen Ursprungsgesamtfehlers als Summe aus den Einzelfehlern;
f. Entfernen des neuen Referenzeingangsvektors aus den Referenzeingangsvektoren (17, 18, 19, 20, 21, 22, 23, 24) bei Überschreiten des Ursprungsgesamtfehlers durch den neuen Ursprungsgesamtfehler.

8. Verfahren nach einem der vorhergehenden Ansprüche, **dadurch gekennzeichnet, dass** zum Ermitteln des Ausgangsvektors zu dem Eingangsvektor die folgenden Schritte durchgeführt werden:
a. Wiederholen der folgenden Schritte, bis in einem n-dimensionalen Raum um den Eingangsvektor (4) ein Referenzeingangsvektor (17, 18, 19, 20, 21, 22, 23, 24) vorliegt, dessen Abstand zu dem Eingangsvektor (4) einen Schwellenwert unterschreitet, und/oder eine maximale Anzahl an Iterationen erreicht ist:
i. Auswählen wenigstens eines Nachbarvektors aus den Referenzeingangsvektoren (17, 18, 19, 20, 21, 22, 23, 24),
ii. Ermitteln eines zusätzlichen Referenzeingangsvektors aus dem wenigstens einen Nachbarvektor und Hinzufügen des zusätzlichen Referenzeingangsvektors (29,30) zu den Referenzeingangsvektoren (17, 18, 19, 20, 21, 22, 23, 24);
b. Auswählen wenigstens eines dem Eingangsvektor (4) am nächsten liegenden Berechnungsvektors aus den Referenzeingangsvektoren (17, 18, 19, 20, 21, 22, 23, 24) und Berechnen des Ausgangsvektors anhand des wenigstens einen ausgewählten Berechnungsvektors.

9. Verfahren nach Anspruch 8, **dadurch gekennzeichnet, dass** für das Auswählen der Nachbarvektoren für jeden der Referenzeingangsvektoren (17, 18, 19, 20, 21, 22, 23, 24) ein Klassifikationsvektor ermittelt wird, der sich aus der Vorzeichenfunktion einer Differenz zwischen dem Eingangsvektor (4) und dem jeweiligen Referenzeingangsvektor (17, 18, 19, 20, 21, 22, 23, 24) ergibt, und dass aus den Klassifikationsvektoren unterschiedliche Klassifikationsvektoren ermittelt werden und für unterschiedliche Klassifikationsvektoren jeweils genau ein Referenzeingangsvektor (17, 18, 19, 20, 21, 22, 23, 24) als Nachbarvektor ausgewählt wird.

10. Antriebseinrichtung (1) für ein Kraftfahrzeug, welche gemäß dem Verfahren nach Anspruch 1 betrieben wird, wobei die Antriebseinrichtung (1) ein Steuergerät (3) und ein Antriebsaggregat (2) aufweist und mit Hilfe des Steuergeräts (3) ansteuerbar ist, wobei n-dimensionalen Referenzeingangsvektoren (17, 18, 19, 20, 21, 22, 23, 24) jeweils ein Referenzausgangsvektor zugeordnet ist, welche Referenzvektoren in dem Steuergerät (3) hinterlegt sind und aus welchen zumindest zu einem Betriebsparameter für das Antriebsaggregat (2) des Kraftfahrzeugs aufweisenden n-dimensionalen Eingangsvektor (4) ein Ausgangsvektor (12) ermittelbar ist, **dadurch gekennzeichnet, dass** das Steuergerät (3) dazu vorgesehen und ausgebildet ist, bei Vorliegen eines neuen Referenzeingangsvektors mit dazugehörigem neuen Referenzausgangsvektor folgende Schritte in der angegebenen Reihenfolge durchzuführen:
a. Ermitteln eines Einzelfehlers der Referenzeingangsvektoren (17, 18, 19, 20, 21, 22, 23, 24), der die Genauigkeit beschreibt, mit welcher der Referenzausgangsvektor eines der Referenzeingangsvektoren (17, 18, 19, 20, 21, 22, 23, 24) aus den anderen Referenzeingangsvektoren (17, 18, 19, 20, 21, 22, 23, 24) und den ihnen zugeordneten Referenzausgangsvektoren ermittelt werden kann, ohne auf den einen Referenzeingangsvektor (17, 18, 19, 20, 21, 22, 23, 24) und seinen Referenzausgangsvektor zurückzugreifen;
b. Zwischenspeichern des Referenzeingangsvektors (17, 18, 19, 20, 21, 22, 23, 24) mit dem kleinsten Einzelfehler und Entfernen dieses Referenzeingangsvektors (17, 18, 19, 20, 21, 22, 23, 24) aus den Referenzeingangsvektoren (17, 18, 19, 20, 21, 22, 23, 24);
c. Berechnen des Ausgangsvektors (12) mit dem neuen Referenzeingangsvektor als Eingangsvektor (4);
d. Ermitteln des Einzelfehlers aus einer Differenz zwischen dem Ausgangsvektor (12) und dem dem neuen Referenzeingangsvektor zugeordneten Referenzausgangsvektor;
e. Hinzufügen des entfernten Referenzeingangsvektors (17, 18, 19, 20, 21, 22, 23, 24) zu den Referenzeingangsvektoren (17, 18, 19, 20, 21, 22, 23, 24);
f. Ersetzen des Referenzeingangsvektors (17, 18, 19, 20, 21, 22, 23, 24) mit dem kleinsten Einzelfehler durch den neuen Referenzeingangsvektor, falls der Einzelfehler des neuen Referenzeingangsvektors größer ist als der kleinste Einzelfehler; wobei
g. dem Antriebsaggregat (2) und dem Steuergerät (3) derselbe Eingangsvektor (4) zugeführt wird, welcher den zumindest einen Betriebsparameter für das Antriebsaggregat (2) aufweist, wobei das Antriebsaggregat (2) anhand des zumindest einen Betriebsparameters betrieben wird und das Steuergerät (3) aus dem Eingangsvektor (4) den Ausgangsvektor (12) ermittelt, und wobei ein gemessener Messwert, der eine Ausgangsgröße des Antriebsaggregats (2) darstellt, mit dem Ausgangsvektor (12) verglichen und bei einer Abweichung auf einen Fehler des Antriebsaggregats (2) erkannt und/oder der Eingangsvektor (4) derart angepasst wird, dass der Messwert dem Ausgangsvektor (12) entspricht.

## Claims

1. Method for operating a drive device (1) for a motor vehicle , which comprises a control device (3) and a drive unit (2) and is controlled by means of the control device (3), wherein n-dimensional reference input vectors (17, 18, 19, 20, 21, 22, 23, 24) are each assigned a reference output vector, which reference vectors are stored in the control device (3) and from which an output vector (12) can be determined at least for an n-dimensional input vector (4) comprising operating parameters for the drive unit (2) of the motor vehicle, **characterised in that**, when a new reference input vector with associated new reference output vector is present, the following steps are carried out in the specified sequence by means of the control device (3):
a. Determining an individual error of the reference input vectors (17, 18, 19, 20, 21, 22, 23, 24), which describes the accuracy with which the reference output vector of one of the reference input vectors (17, 18, 19, 20, 21, 22, 23, 24) can be determined from the other reference input vectors (17, 18, 19, 20, 21, 22, 23, 24) and the reference output vectors assigned to them without having to refer to the one reference input vector (17, 18, 19, 20, 21, 22, 23, 24) and its reference output vector;
b. Intermediate storage of the reference input vector (17, 18, 19, 20, 21, 22, 23, 24) with the smallest individual error and removal of this reference input vector (17, 18, 19, 20, 21, 22, 23, 24) from the reference input vectors (17, 18, 19, 20, 21, 22, 23, 24);
c. Calculating the output vector (12) with the new reference input vector as the input vector (4);
d. Determining the individual error from a difference between the output vector (12) and the reference output vector assigned to the new reference input vector;
e. Adding the removed reference input vector (17, 18, 19, 20, 21, 22, 23, 24) to the reference input vectors (17, 18, 19, 20, 21, 22, 23, 24);
f. Replacing the reference input vector (17, 18, 19, 20, 21, 22, 23, 24) with the smallest individual error by the new reference input vector if the individual error of the new reference input vector is greater than the smallest individual error; wherein
g. the drive unit (2) and the control device (3) are supplied with the same input vector (4), which comprises the at least one operating parameter for the drive unit (2), wherein the drive unit (2) is operated on the basis of the at least one operating parameter and the control device (3) determines the output vector (12) from the input vector (4), and wherein a measured value which is measured and which represents an output variable of the drive unit (2) is compared with the output vector (12) and, in the event of a deviation, a fault of the drive unit (2) is recognised and/or the input vector (4) is adapted in such a way that the measured value corresponds to the output vector (12).

2. Method according to claim 1, **characterised in that** the following steps are carried out for each of the reference input vectors (17, 18, 19, 20, 21, 22, 23, 24) in order to determine individual errors of the reference input vectors (17, 18, 19, 20, 21, 22, 23, 24):
a. Intermediate storage of the respective reference input vector (17, 18, 19, 20, 21, 22, 23, 24) as a test vector and removal of the reference input vector (17, 18, 19, 20, 21, 22, 23, 24) from the reference input vectors (17, 18, 19, 20, 21, 22, 23, 24);
b. Calculating the output vector (12) with the test vector as input vector (4);
c. Determining the respective individual error from a difference between the output vector (12) and the reference output vector assigned to the test vector;
d. Assigning the respective individual error to the test vector; and
e. Adding the test vector to the reference input vectors (17, 18, 19, 20, 21, 22, 23, 24).

3. Method according to one of the preceding claims, **characterised in that** the following steps are carried out to optimise the reference input vectors (17, 18, 19, 20, 21, 22, 23, 24):
a. Determining the individual errors of the reference input vectors (17, 18, 19, 20, 21, 22, 23, 24);
b. Calculating a total original error from the individual errors;
c. Carrying out the following steps for each of the reference input vectors (17, 18, 19, 20, 21, 22, 23, 24):
i. Removing the respective reference input vector (17, 18, 19, 20, 21, 22, 23, 24) from the reference input vectors (17, 18, 19, 20, 21, 22, 23, 24),
ii. Determining the individual error of each of the remaining reference input vectors (17, 18, 19, 20, 21, 22, 23, 24),
iii. Calculating a total reduction error of the reduced reference input vectors (17, 18, 19, 20, 21, 22, 23, 24) from the individual errors of the remaining reference input vectors (17, 18, 19, 20, 21, 22, 23, 24),
iv. Assigning the total reduction error to the removed reference input vectors (17, 18, 19, 20, 21, 22, 23, 24),
v. Adding the removed reference input vector (17, 18, 19, 20, 21, 22, 23, 24) to the reference input vectors (17, 18, 19, 20, 21, 22, 23, 24);
d. Removing of the reference input vector (17, 18, 19, 20, 21, 22, 23, 24) with the smallest total reduction error and/or with a total reduction error that is less than the total original error from the reference input vectors (17, 18, 19, 20, 21, 22, 23, 24).

4. Method according to one of the preceding claims, **characterised in that**, if a reference input vector (17, 18, 19, 20, 21, 22, 23, 24) is present in the reference input vectors (17, 18, 19, 20, 21, 22, 23, 24) which corresponds to the new reference input vector, the new reference output vector is determined from the reference output vector assigned to the corresponding reference input vector (17, 18, 19, 20, 21, 22, 23, 24) and the new reference output vector.

5. Method according to claim 4, **characterised in that** the new reference output vector is determined by averaging the reference output vector and the new reference output vector.

6. Method according to one of the preceding claims, **characterised in that** replacing the reference input vector (17, 18, 19, 20, 21, 22, 23, 24) with the new reference input vector is only carried out if a number of the reference input vectors (17, 18, 19, 20, 21, 22, 23, 24) is equal to a fixed maximum number.

7. Method according to one of the preceding claims, **characterised in that**, when the new reference input vector with the associated new reference output vector is present, the following steps are carried out:
a. Determining the individual errors of the reference input vectors (17, 18, 19, 20, 21, 22, 23, 24);
b. Calculating the total original error as the sum of the individual errors;
c. Adding the new reference input vector to the new reference input vectors (17, 18, 19, 20, 21, 22, 23, 24);
d. Re-Determining the individual errors of the reference input vectors (17, 18, 19, 20, 21, 22, 23, 24);
e. Calculating a new total original error as the sum of the individual errors;
f. Removing the new reference input vector from the reference input vectors (17, 18, 19, 20, 21, 22, 23, 24) if the total original error is exceeded by the new total original error.

8. Method according to one of the preceding claims, **characterised in that** the following steps are carried out to determine the output vector to the input vector:
a. Repeating the following steps until a reference input vector (17, 18, 19, 20, 21, 22, 23, 24) is present in an n-dimensional space around the input vector (4) whose distance to the input vector (4) falls below a threshold value and/or a maximum number of iterations is reached:
i. Selecting at least one neighbour vector from the reference input vectors (17, 18, 19, 20, 21, 22, 23, 24),
ii. Determining an additional reference input vector from the at least one neighbour vector and adding the additional reference input vector (29, 30) to the reference input vectors (17, 18, 19, 20, 21, 22, 23, 24);
b. Selecting at least one calculation vector closest to the input vector (4) from the reference input vectors (17, 18, 19, 20, 21, 22, 23, 24) and calculating the output vector using the at least one selected calculation vector.

9. Method according to claim 8, **characterised in that**, for selecting the neighbour vectors, a classification vector is determined for each of the reference input vectors (17, 18, 19, 20, 21, 22, 23, 24), which classification vector results from the sign function of a difference between the input vector (4) and the respective reference input vector (17, 18, 19, 20, 21, 22, 23, 24), and **in that** different classification vectors are determined from the classification vectors and exactly one reference input vector (17, 18, 19, 20, 21, 22, 23, 24) is selected as neighbour vector for different classification vectors.

10. Drive device (1) for a motor vehicle, which is operated in accordance with the method according to claim 1, wherein the drive device (1) comprises a control device (3) and a drive unit (2) and can be controlled by means of the control device (3), wherein n-dimensional reference input vectors (17, 18, 19, 20, 21, 22, 23, 24) are each assigned a reference output vector, which reference vectors are stored in the control device (3) and from which an output vector (12) can be determined at least for an n-dimensional input vector (4) comprising operating parameters for the drive unit (2) of the motor vehicle, **characterised in that** the control device (3) is provided and configured to carry out the following steps in the specified sequence when a new reference input vector with associated new reference output vector is provided:
a. Determining in individual error of the reference input vectors (17, 18, 19, 20, 21, 22, 23, 24) which describes the accuracy with which the reference output vector of one of the reference input vectors (17, 18, 19, 20, 21, 22, 23, 24) can be determined from the other reference input vectors (17, 18, 19, 20, 21, 22, 23, 24) and the reference output vectors assigned to them without having recourse to the one reference input vector (17, 18, 19, 20, 21, 22, 23, 24) and its reference output vector;
b. Intermediate storage of the reference input vector (17, 18, 19, 20, 21, 22, 23, 24) with the smallest individual error and removal of this reference input vector (17, 18, 19, 20, 21, 22, 23, 24) from the reference input vectors (17, 18, 19, 20, 21, 22, 23, 24);
c. Calculation the output vector (12) with the new reference input vector as the input vector (4);
d. Determining the individual error from a difference between the output vector (12) and the reference output vector assigned to the new reference input vector;
e. Adding the removed reference input vector (17, 18, 19, 20, 21, 22, 23, 24) to the reference input vectors (17, 18, 19, 20, 21, 22, 23, 24);
f. Replacing the reference input vector (17, 18, 19, 20, 21, 22, 23, 24) with the smallest individual error by the new reference input vector if the individual error of the new reference input vector is greater than the smallest individual error; wherein
g. the drive unit (2) and the control device (3) are supplied with the same input vector (4), which comprises the at least one operating parameter for the drive unit (2), wherein the drive unit (2) is operated on the basis of the at least one operating parameter and the control device (3) determines the output vector (12) from the input vector (4), and wherein a measured value, which is measured and represents an output variable of the drive unit (2), is compared with the output vector (12) and, in the event of a deviation, a fault of the drive unit (2) is recognised and/or the input vector (4) is adapted in such a way that the measured value corresponds to the output vector (12).

## Revendications

1. Procédé destiné au fonctionnement d'un dispositif d'entraînement (1) pour un véhicule à moteur, qui présente un appareil de commande (3) et un agrégat d'entraînement (2) et est commandé à l'aide de l'appareil de commande (3), dans lequel un vecteur de sortie de référence est respectivement associé à des vecteurs d'entrée de référence (17, 18, 19, 20, 21, 22, 23, 24) à n dimensions, lesquels vecteurs d'entrée de référence sont déposés dans l'appareil de commande (3) et à partir desquels au moins un vecteur de sortie (12) peut être déterminé comme vecteur d'entrée (4) à n dimensions présentant un paramètre de fonctionnement pour l'agrégat d'entraînement (2) du véhicule à moteur, **caractérisé en ce que** en présence d'un nouveau vecteur d'entrée de référence avec un nouveau vecteur de sortie de référence correspondant les étapes suivantes peuvent être réalisées au moyen de l'appareil de commande (3) dans l'ordre indiqué :
a. détermination d'une erreur isolée des vecteurs d'entrée de référence (17, 18, 19, 20, 21, 22, 23, 24) qui décrit la précision avec laquelle le vecteur de sortie de référence d'un des vecteurs d'entrée de référence (17, 18, 19, 20, 21, 22, 23, 24) peut être déterminé à partir des autres vecteurs d'entrée de référence (17, 18, 19, 20, 21, 22, 23, 24) et des vecteurs de sortie de référence qui leur sont associés sans se référer au vecteur d'entrée de référence (17, 18, 19, 20, 21, 22, 23, 24) et à son vecteur de sortie de référence ;
b. mise en mémoire tampon du vecteur d'entrée de référence (17, 18, 19, 20, 21, 22, 23, 24) avec l'erreur isolée la plus petite et élimination de ce vecteur d'entrée de référence (17, 18, 19, 20, 21, 22, 23, 24) des vecteurs d'entrée de référence (17, 18, 19, 20, 21, 22, 23, 24) ;
c. calcul du vecteur de sortie (12) avec le nouveau vecteur d'entrée de référence en tant que vecteur d'entrée (4) ;
d. détermination de l'erreur isolée à partir d'une différence entre le vecteur de sortie (12) et le vecteur de sortie de référence associé au nouveau vecteur d'entrée de référence ;
e. ajout du vecteur d'entrée de référence (17, 18, 19, 20, 21, 22, 23, 24) éliminé aux vecteurs d'entrée de référence (17, 18, 19, 20, 21, 22, 23, 24) ;
f. remplacement du vecteur d'entrée de référence (17, 18, 19, 20, 21, 22, 23, 24) avec la plus petite erreur isolée par le biais du nouveau vecteur d'entrée de référence, dans le cas où l'erreur isolée du vecteur d'entrée de référence est plus grande que la plus petite erreur isolée ; dans lequel
g. le même vecteur d'entrée (4) est acheminé vers l'agrégat d'entraînement (2) et l'appareil de commande (3), vecteur d'entrée qui présente l'au moins un paramètre de fonctionnement pour l'agrégat d'entraînement (2), dans lequel l'agrégat d'entraînement (2) fonctionne à l'aide de l'au moins un paramètre de fonctionnement et l'appareil de commande (3) détermine le vecteur de sortie (12) à partir du vecteur d'entrée (4), et dans lequel une valeur de mesure mesurée qui représente une grandeur de sortie de l'agrégat d'entraînement (2) est comparée au vecteur de sortie (12) et lors d'un écart une erreur de l'agrégat d'entraînement (2) est reconnue et/ou le vecteur d'entrée (4) est adapté de telle sorte que la valeur de mesure correspond au vecteur de sortie (12).

2. Procédé selon la revendication 1, **caractérisé en ce que** pour la détermination d'erreurs isolées des vecteurs d'entrée de référence (17, 18, 19, 20, 21, 22, 23, 24) pour chacun des vecteurs d'entrée de référence (17, 18, 19, 20, 21, 22, 23, 24) les étapes suivantes sont réalisées :
a. mise en mémoire tampon du vecteur d'entrée de référence (17, 18, 19, 20, 21, 22, 23, 24) respectif en tant que vecteur de vérification et élimination du vecteur d'entrée de référence (17, 18, 19, 20, 21, 22, 23, 24) des vecteurs d'entrée de référence (17, 18, 19, 20, 21, 22, 23, 24) ;
b. calcul du vecteur de sortie (12) avec le vecteur de vérification en tant que vecteur d'entrée (4) ;
c. détermination de l'erreur isolée respective à partir d'une différence entre le vecteur de sortie (12) et le vecteur de sortie de référence associé au vecteur de vérification ;
d. association de l'erreur isolée respective au vecteur de vérification ; et
e. ajout du vecteur de vérification aux vecteurs d'entrée de référence (17, 18, 19, 20, 21, 22, 23, 24).

3. Procédé selon l'une quelconque des revendications précédentes, **caractérisé en ce que** pour l'optimisation des vecteurs d'entrée de référence (17, 18, 19, 20, 21, 22, 23, 24) les étapes suivantes sont réalisées :
a. détermination de l'erreur isolée des vecteurs d'entrée de référence (17, 18, 19, 20, 21, 22, 23, 24) ;
b. calcul d'une erreur globale d'origine à partir des erreurs isolées ;
c. réalisation des étapes suivantes pour chacun des vecteurs d'entrée de référence (17, 18, 19, 20, 21, 22, 23, 24) :
i. élimination du vecteur d'entrée de référence (17, 18, 19, 20, 21, 22, 23, 24) respectif des vecteurs d'entrée de référence (17, 18, 19, 20, 21, 22, 23, 24),
ii. détermination de l'erreur isolée de chacun des vecteurs d'entrée de référence (17, 18, 19, 20, 21, 22, 23, 24) restants,
iii. calcul d'une erreur globale de réduction des vecteurs d'entrée de référence (17, 18, 19, 20, 21, 22, 23, 24) réduits à partir des erreurs isolées des vecteurs d'entrée de référence (17, 18, 19, 20, 21, 22, 23, 24) restants,
iv. association de l'erreur globale de réduction au vecteur d'entrée de référence (17, 18, 19, 20, 21, 22, 23, 24) éliminé,
v. ajout du vecteur d'entrée de référence (17, 18, 19, 20, 21, 22, 23, 24) éliminé aux vecteurs d'entrée de référence (17, 18, 19, 20, 21, 22, 23, 24) ;
d. élimination du vecteur d'entrée de référence (17, 18, 19, 20, 21, 22, 23, 24) avec l'erreur globale de réduction la plus petite et/ou avec l'erreur globale de réduction plus petite que l'erreur globale d'origine des vecteurs d'entrée de référence (17, 18, 19, 20, 21, 22, 23, 24).

4. Procédé selon l'une quelconque des revendications précédentes, **caractérisé en ce que** lors de la présence d'un vecteur d'entrée de référence (17, 18, 19, 20, 21, 22, 23, 24) dans les vecteurs d'entrée de référence (17, 18, 19, 20, 21, 22, 23, 24) qui correspond au nouveau vecteur d'entrée de référence, le nouveau vecteur de sortie de référence est déterminé à partir du vecteur de sortie de référence associé au vecteur d'entrée de référence (17, 18, 19, 20, 21, 22, 23, 24) correspondant et du nouveau vecteur de sortie de référence.

5. Procédé selon la revendication 4, **caractérisé en ce que** le nouveau vecteur de sortie de référence est déterminé à partir du vecteur de sortie de référence et du nouveau vecteur de sortie de référence par le biais de la formation d'une valeur moyenne.

6. Procédé selon l'une quelconque des revendications précédentes, **caractérisé en ce que** le remplacement du vecteur d'entrée de référence (17, 18, 19, 20, 21, 22, 23, 24) par le nouveau vecteur d'entrée de référence n'est réalisé que si un nombre des vecteurs d'entrée de référence (17, 18, 19, 20, 21, 22, 23, 24) est le même qu'un nombre maximal fixé.

7. Procédé selon l'une quelconque des revendications précédentes, **caractérisé en ce que** lors de la présence du nouveau vecteur d'entrée de référence les étapes suivantes sont réalisées avec le nouveau vecteur de sortie de référence correspondant :
a. détermination de l'erreur isolée des vecteurs d'entrée de référence (17, 18, 19, 20, 21, 22, 23, 24) ;
b. calcul de l'erreur globale d'origine en tant que somme des erreurs isolées ;
c. ajout du nouveau vecteur d'entrée de référence aux nouveaux vecteurs d'entrée de référence (17, 18, 19, 20, 21, 22, 23, 24) ;
d. détermination renouvelée des erreurs isolées des vecteurs d'entrée de référence (17, 18, 19, 20, 21, 22, 23, 24) ;
e. calcul d'une nouvelle erreur globale d'origine en tant que somme des erreurs isolées ;
f. élimination du nouveau vecteur d'entrée de référence des vecteurs d'entrée de référence (17, 18, 19, 20, 21, 22, 23, 24) lors du dépassement de l'erreur globale d'origine par le biais de la nouvelle erreur globale d'origine.

8. Procédé selon l'une quelconque des revendications précédentes, **caractérisé en ce que** pour la détermination du vecteur de sortie au vecteur d'entrée les étapes suivantes sont réalisées :
a. répétition des étapes suivantes jusqu'à ce qu'un vecteur d'entrée de référence (17, 18, 19, 20, 21, 22, 23, 24) soit présent dans un espace à n dimensions autour du vecteur d'entrée (4), dont l'écart par rapport au vecteur d'entrée (4) est plus petit qu'une valeur seuil et/ou jusqu'à ce qu'un nombre maximal d'itérations soit atteint :
i. sélection d'au moins un vecteur voisin à partir des vecteurs d'entrée de référence (17, 18, 19, 20, 21, 22, 23, 24),
ii. détermination d'un vecteur d'entrée de référence supplémentaire à partir de l'au moins un vecteur voisin et ajout du vecteur d'entrée de référence (29, 30) supplémentaire aux vecteurs d'entrée de référence (17, 18, 19, 20, 21, 22, 23, 24) ;
b. sélection d'au moins un vecteur de calcul se trouvant le plus près du vecteur d'entrée (4) à partir des vecteurs d'entrée de référence (17, 18, 19, 20, 21, 22, 23, 24) et calcul du vecteur de sortie à l'aide de l'au moins un vecteur de calcul sélectionné.

9. Procédé selon la revendication 8, **caractérisé en ce que** pour la sélection des vecteurs voisins pour chacun des vecteurs d'entrée de référence (17, 18, 19, 20, 21, 22, 23, 24) un vecteur de classification est déterminé, qui découle de la fonction algébrique d'une différence entre le vecteur d'entrée (4) et le vecteur d'entrée de référence (17, 18, 19, 20, 21, 22, 23, 24) respectif et **en ce que** des vecteurs de classification différents sont déterminés à partir des vecteurs de classification et pour des vecteurs de classification différents un vecteur d'entrée de référence (17, 18, 19, 20, 21, 22, 23, 24) est sélectionné respectivement précisément en tant que vecteur voisin.

10. Dispositif d'entraînement (1) pour un véhicule à moteur, qui peut fonctionner conformément au procédé selon la revendication 1, dans lequel le dispositif d'entraînement (1) présente un appareil de commande (3) et un agrégat d'entraînement (2) et peut être commandé à l'aide de l'appareil de commande (3), dans lequel un vecteur de sortie de référence est respectivement associé à des vecteurs d'entrée de référence (17, 18, 19, 20, 21, 22, 23, 24) à n dimensions, lesquels vecteurs de référence sont déposés dans l'appareil de commande (3) et à partir desquels au moins un vecteur de sortie (12) peut être déterminé à partir d'au moins un vecteur d'entrée (4) à n dimensions présentant un paramètre de fonctionnement pour l'agrégat d'entraînement (2) du véhicule à moteur, **caractérisé en ce que** l'appareil de commande (3) est prévu et configuré pour réaliser en présence d'un nouveau vecteur d'entrée de référence les étapes suivantes avec un nouveau vecteur de sortie de référence respectif dans l'ordre indiqué :
a. détermination d'une erreur isolée des vecteurs d'entrée de référence (17, 18, 19, 20, 21, 22, 23, 24) qui décrit la précision avec laquelle le vecteur de sortie de référence d'un des vecteurs d'entrée de référence (17, 18, 19, 20, 21, 22, 23, 24) peut être déterminé à partir des autres vecteurs d'entrée de référence (17, 18, 19, 20, 21, 22, 23, 24) et des vecteurs de sortie de référence qui leur sont associés sans se référer au vecteur d'entrée de référence (17, 18, 19, 20, 21, 22, 23, 24) et à son vecteur de sortie de référence ;
b. mise en mémoire tampon du vecteur d'entrée de référence (17, 18, 19, 20, 21, 22, 23, 24) avec l'erreur isolée la plus petite et élimination de ce vecteur d'entrée de référence (17, 18, 19, 20, 21, 22, 23, 24) des vecteurs d'entrée de référence (17, 18, 19, 20, 21, 22, 23, 24) ;
c. calcul du vecteur de sortie (12) avec le nouveau vecteur d'entrée de référence en tant que vecteur d'entrée (4) ;
d. détermination de l'erreur isolée à partir d'une différence entre le vecteur de sortie (12) et le vecteur de sortie de référence associé au nouveau vecteur d'entrée de référence ;
e. ajout du vecteur d'entrée de référence (17, 18, 19, 20, 21, 22, 23, 24) éliminé aux vecteurs d'entrée de référence (17, 18, 19, 20, 21, 22, 23, 24) ;
f. remplacement du vecteur d'entrée de référence (17, 18, 19, 20, 21, 22, 23, 24) avec la plus petite erreur isolée par le biais du nouveau vecteur d'entrée de référence, dans le cas où l'erreur isolée du nouveau vecteur d'entrée de référence est plus grande que la plus petite erreur isolée ; dans lequel
g. le même vecteur d'entrée (4) est acheminé vers l'agrégat d'entraînement (2) et l'appareil de commande (3), vecteur d'entrée qui présente l'au moins un paramètre de fonctionnement pour l'agrégat d'entraînement (2), dans lequel l'agrégat d'entraînement (2) fonctionne à l'aide de l'au moins un paramètre de fonctionnement et l'appareil de commande (3) détermine le vecteur de sortie (12) à partir du vecteur d'entrée (4), et dans lequel une valeur de mesure mesurée qui représente une grandeur de sortie de l'agrégat d'entraînement (2) est comparée au vecteur de sortie (12) et lors d'un écart est reconnue sur une erreur de l'agrégat d'entraînement (2) et/ou le vecteur d'entrée (4) est adapté de telle sorte que la valeur de mesure correspond au vecteur de sortie (12).
